(19) Europäisches Patentamt
European Patent Office
Office européen des brevets

(11) **EP 4 641 452 A1**

(12) **EUROPEAN PATENT APPLICATION**

(43) Date of publication:
**29.10.2025  Bulletin 2025/44**

(21) Application number: **25167417.2**

(22) Date of filing: **31.03.2025**

(51) International Patent Classification (IPC):
**G06N 10/20** *(2022.01)*   **G06N 10/40** *(2022.01)*
**G06N 10/60** *(2022.01)*   **G06N 10/70** *(2022.01)*

(52) Cooperative Patent Classification (CPC):
**G06N 10/60; G06N 10/20; G06N 10/40;**
**G06N 10/70**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **26.04.2024  JP 2024072495**

(71) Applicant: **Fujitsu Limited**
**Kawasaki-shi, Kanagawa 211-8588 (JP)**

(72) Inventor: **MORITA, Mikio**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **QUANTUM COMPUTATION SUPPORT PROGRAM, QUANTUM COMPUTATION SUPPORT METHOD, AND INFORMATION PROCESSING APPARATUS**

(57)  A program including instructions causing a computer to execute: classifying observables for computing a Hamiltonian of a problem to be solved by a VQE, into any group of simultaneously measurable observables; generating a first quantum circuit (QC) including a first basis conversion circuit (BCC) for measurement of first observables in a first group; generating a second QC including a second BCC where a quantum gate for measurement of second observables in a second group and a second two-qubit gate (QG) performing a same gate operation as a first two-QG in the first BCC are arranged; acquiring measurement results of the first observables by a quantum computer using the first CC; acquiring results of the second observables by replacement using the second two-QG, for a measurement result obtained by the quantum computer using the second QC; and computing the Hamiltonian using the measurement results of the first and second observables.

FIG. 1

EP 4 641 452 A1

**Description**

FIELD

The embodiments discussed herein are related to a quantum computation support program, a quantum computation support method, and an information processing apparatus.

BACKGROUND

In the field of quantum computers, a noisy intermediate-scale quantum computer (NISQ) is expected to be put into practical use. The NISQ is a middle-scale quantum computer without an error correction function. As one of applications of the NISQ, there is computation by a variational quantum eigensolver (VQE). The VQE is a variational algorithm for obtaining a ground state of a quantum multi-body system. The VQE may be used to perform quantum chemical computation in the NISQ, for example. The quantum chemical computation is computation for obtaining a molecular state or physical property information by solving the Schrödinger equation. Currently, various studies are being advanced for practical use of computation using the VQE.

As one of problems for the practical use of the VQE, there is a point that computation accuracy is deteriorated due to noise derived from hardware. The NISQ does not have an error correction function, and an error occurs in a computation result due to an influence of errors.

As measures against errors, for example, a system that reduces errors due to sampling in a quantum device has been proposed. A system for reducing errors due to circuit gauge selection has also been proposed. In a system that randomly accesses a set of quantum gates related to an arbitrary quantum gate included in a quantum instruction set, a technique of reducing unitary errors at the time of execution of the quantum instruction has also been proposed. There has also been proposed a device that actively mitigates coherent errors by inserting a Clifford gate operation at an intermediate stage and correcting an original quantum circuit.

Japanese Laid-open Patent Publication No. 2023-035941, Japanese National Publication of International Patent Application No. 2023-501752, and U.S. Patent Application Publication Nos. 2021/0294680 and 2023/0016817 are disclosed as related art.

SUMMARY

TECHNICAL PROBLEM

With the VQE, a plurality of quantum circuits are executed over its algorithm. At this time, the influence of errors in each of the plurality of quantum circuits to be executed is different. When the influence of errors is different for each quantum circuit, an error mitigation function included in the VQE does not work well, and the influence of errors largely remains in a final computed value (ground energy). When the influence of remaining errors is large, the computation result is inaccurate.

In one aspect, it is desired to reduce an influence of errors in a VQE.

SOLUTION TO PROBLEM

According to an aspect of the embodiments, there is provided a quantum computation support program including instructions which, when executed by a computer, cause the computer to execute processing including: classifying a plurality of observables used for computing a Hamiltonian that corresponds to a problem to be solved by a variational quantum eigensolver into any of a plurality of groups into which simultaneously measurable observables are grouped; generating a first quantum circuit that includes a first basis conversion circuit for enabling simultaneous measurement of a plurality of first observables that belong to a first group; generating a second quantum circuit that includes a second basis conversion circuit in which a quantum gate for enabling simultaneous measurement of a plurality of second observables that belong to a second group and a second two-qubit gate that performs a same gate operation as a first two-qubit gate included in the first basis conversion circuit are arranged; acquiring measurement results of the plurality of first observables by causing a quantum computer to execute the first quantum circuit; acquiring measurement results of the plurality of second observables by performing replacement according to the second two-qubit gate, with respect to a measurement result obtained by causing the quantum computer to execute the second quantum circuit; and computing the Hamiltonian by using the measurement results of the plurality of first observables and the plurality of second observables.

ADVANTAGEOUS EFFECTS OF INVENTION

According to one aspect, it is possible to reduce an influence of errors in a VQE.

BRIEF DESCRIPTION OF DRAWINGS

FIG. 1 is a diagram illustrating an example of a quantum computation support method according to a first embodiment;
FIG. 2 is a diagram illustrating an example of a system configuration according to a second embodiment;
FIG. 3 is a diagram illustrating an example of hardware of devices constituting a quantum computation system;
FIG. 4 is a block diagram illustrating an example of functions of a classical computer for quantum chemical computation by a VQE;
FIG. 5 is a diagram illustrating an example of quantum chemical computation by a VQE;
FIG. 6 is a diagram illustrating an example of a quantum circuit configuration for VQE computation;
FIG. 7 is a diagram illustrating an example of processing of adding a basis conversion circuit for an observable of a "pattern 1";
FIG. 8 is a diagram illustrating an example of processing of adding a basis conversion circuit for an observable of a "pattern 2";
FIG. 9 is a diagram illustrating an example of processing of adding a basis conversion circuit for an observable of a "pattern 3";
FIG. 10 is a diagram illustrating an example of replacement of a measurement result accompanied by addition of a CNOT gate;
FIG. 11 is a diagram illustrating an example of a quantum circuit for each divided Hamiltonian;
FIG. 12 is a flowchart illustrating an example of a procedure of VQE computation processing;
FIG. 13 is a flowchart illustrating an example of a procedure of basis conversion circuit (common portion) generation processing;
FIG. 14 is a flowchart illustrating an example of a procedure of basis conversion circuit ($<H_i>$ eigen portion) generation processing;
FIG. 15 is a flowchart illustrating an example of a procedure of expected value computation processing of $<H_i>$;
FIG. 16 is a diagram illustrating an example of an Ansatz circuit;
FIG. 17 is a diagram illustrating an example of a common portion of a basis conversion circuit;
FIG. 18 is a diagram illustrating an example of a quantum circuit for $<H_1>$ computation; and
FIG. 19 is a diagram illustrating an example of a quantum circuit for $<H_2>$ computation.

DESCRIPTION OF EMBODIMENTS

The present embodiments will be described below with reference to the drawings. Each of the embodiments may be implemented by combining a plurality of embodiments within a range without contradiction.

[First Embodiment]

A first embodiment is a quantum computation support method that reduces an influence of errors in an entire VQE by reducing a difference in the influence of errors between a plurality of quantum circuits executed in the VQE.

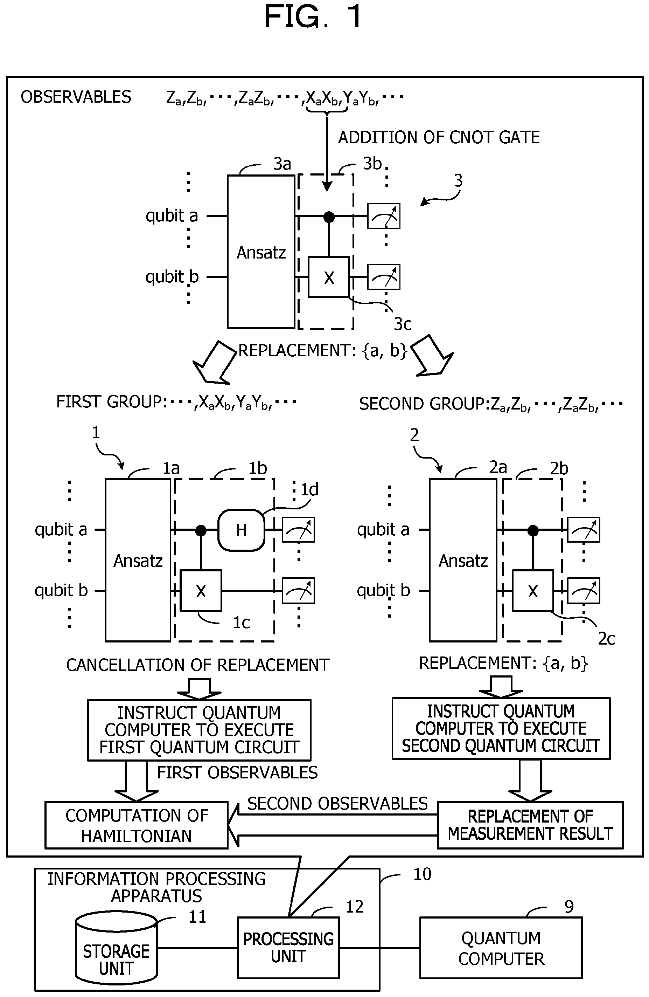

FIG. 1 is a diagram illustrating an example of the quantum computation support method according to the first embodiment. FIG. 1 illustrates an information processing apparatus 10 that executes the quantum computation support method. For example, by executing a quantum computation support program, the information processing apparatus 10 may perform the quantum computation support method.

The information processing apparatus 10 includes a storage unit 11 and a processing unit 12. The storage unit 11 is, for example, a memory or a storage device included in the information processing apparatus 10. The processing unit 12 is, for example, a processor or an arithmetic operation circuit included in the information processing apparatus 10.

The storage unit 11 stores, for example, the quantum computation support program. The storage unit 11 stores data on a problem to be solved, intermediate data generated in an execution process of the quantum computation support program, an expected value of energy output as an execution result, and the like.

By using a quantum computer 9, the processing unit 12 computes a Hamiltonian corresponding to the problem to be solved by the VQE. For example, the processing unit 12 classifies a plurality of observables to be used for computation of the Hamiltonian into any of a plurality of groups into which observables that may be simultaneously measured are grouped. In the example in FIG. 1, a first group and a second group are generated. The first group includes observables (XX or YY) computed by using a measurement result of an X basis or a measurement result of a Y basis of an a-th qubit and a b-th qubit (a and b are natural numbers). The second group includes observables computed by using a measurement result of a Z basis for one or more qubits.

The processing unit 12 generates a quantum circuit for each group. For example, the processing unit 12 generates a first quantum circuit 1 capable of simultaneously measuring the observables belonging to the first group. The first quantum circuit 1 includes an Ansatz circuit 1a that represents a wave function and a first basis conversion circuit 1b for enabling simultaneous measurement of a plurality of first observables belonging to the first group. The first basis conversion circuit 1b includes, for example, a first two-qubit gate 1c (CNOT gate) and a one-qubit gate 1d (Hadamard gate).

The processing unit 12 generates a second quantum circuit 2 capable of simultaneously measuring observables belonging to the second group. The second quantum circuit 2 includes an Ansatz circuit 2a that represents a wave function and a second basis conversion circuit 2b for enabling simultaneous measurement of the observables belonging to the second group. In addition to a quantum gate for enabling simultaneous measurement of a plurality of second observables belonging to the second group, a second two-qubit gate 2c that performs the same gate operation as the first two-qubit gate 1c included in the first basis conversion circuit 1b is arranged in the processing unit 12.

By causing the quantum computer 9 to execute the first quantum circuit 1, the processing unit 12 acquires measurement results of the plurality of first observables. By performing replacement according to the second two-qubit gate 2c with respect to a measurement result obtained by causing the quantum computer 9 to execute the second quantum circuit 2, the processing unit 12 acquires measurement results of the plurality of second observables.

The replacement according to the second two-qubit gate 2c is, for example, processing of obtaining a state in a case where the gate operation of the second two-qubit gate 2c is not performed by computation based on the measurement result. For example, when the second two-qubit gate 2c is a CNOT gate, states of qubits in a case where the CNOT gate is caused to act again on a pair of the qubits on which the second two-qubit gate 2c has been caused to act are states after the replacement.

By using the measurement results of the plurality of first observables and the plurality of second observables, the processing unit 12 computes a Hamiltonian. For example, the processing unit 12 repeats the computation of the Hamiltonian using the quantum computer 9 while updating values of parameters included in the Ansatz circuits 1a and 2a until the value of the Hamiltonian converges. The processing unit 12 outputs the value of the Hamiltonian obtained when the value of the Hamiltonian has converged, as an expected value of energy in the problem to be solved.

In this manner, a degree of similarity between the plurality of quantum circuits used in the VQE may be increased. In the example in FIG. 1, the first quantum circuit 1 and the second quantum circuit 2 have the same two-qubit gate configuration. While the difference between the first quantum circuit 1 and the second quantum circuit 2 is the presence or absence of the one-qubit gate 1d, the probability of an error occurring in the gate operation of the one-qubit gate 1d is lower than that in the gate operation of the two-qubit gate. Therefore, it may be said that the influences of errors in the first quantum circuit 1 and the second quantum circuit 2 are equivalent. With the influences of errors in the first quantum circuit 1 and the second quantum circuit 2 being equivalent, the error mitigation function in the VQE may be effectively caused to act, and the influence of errors on the computation in the VQE is reduced.

The second two-qubit gate 2c that is not used for simultaneous measurement of the plurality of second observables belonging to the second group is added to the second quantum circuit 2. Therefore, the measurement result of the second quantum circuit 2 does not directly represent the plurality of second observables. However, the processing unit 12 may obtain the measurement results of the plurality of second observables by replacing the measurement result of the second quantum circuit 2.

The processing unit 12 may generate a third quantum circuit 3 indicating a gate operation common to the first quantum circuit 1 and the second quantum circuit 2, and may generate the first quantum circuit 1 and the second quantum circuit 2 based on the third quantum circuit 3. For example, the processing unit 12 generates the third quantum circuit 3 that includes, following an Ansatz circuit 3a, a third basis conversion circuit 3b in which a third two-qubit gate 3c corresponding to any of the plurality of observables is arranged.

By adding, to the third basis conversion circuit 3b of the third quantum circuit 3, a quantum gate that is insufficient to enable simultaneous measurement of the plurality of first observables, the processing unit 12 generates the first quantum circuit 1. In the example in FIG. 1, the one-qubit gate 1d is added.

By adding, to the third basis conversion circuit 3b of the third quantum circuit 3, a quantum gate that is insufficient to enable simultaneous measurement of the plurality of second observables, the processing unit 12 generates the second quantum circuit 2. In the example in FIG. 1, since there is no quantum gate that is insufficient to enable simultaneous measurement of the plurality of second observables, the second quantum circuit 2 having the same configuration as the third quantum circuit 3 is generated.

By generating the first quantum circuit 1 and the second quantum circuit 2 based on the third quantum circuit 3 indicating a common gate operation as described above, the first quantum circuit 1 and the second quantum circuit 2 may be efficiently generated.

With the following procedure, for example, the processing unit 12 may generate the third quantum circuit 3.

The processing unit 12 sequentially selects each of the plurality of observables. When the third two-qubit gate 3c corresponding to the selected observable is not arranged in the third basis conversion circuit 3b, the processing unit 12 arranges the third two-qubit gate 3c corresponding to the selected observable in the third basis conversion circuit 3b. When the state to be measured of the selected observable is only a Z basis, the processing unit 12 determines that a corresponding two-qubit gate is not desired. In this manner, when there is a corresponding two-qubit gate for each of the plurality of observables, the corresponding two-qubit gate is arranged in the third quantum circuit 3 without omission. Consequently, the configurations of the first quantum circuit 1 and the second quantum circuit 2 may be made common as much as possible.

When a two-qubit gate is arranged in the third quantum circuit 3, the processing unit 12 may set a pair of two qubits on which this two-qubit gate is caused to act, as a replacement target. For example, the processing unit 12 arranges, in the third basis conversion circuit 3b, the third two-qubit gate 3c to be caused to act on a pair of two qubits serving as a measurement target of an X basis or a Y basis in one first observable among the plurality of first observables. The processing unit 12 sets the pair of qubits on which the third two-qubit gate 3c is caused to act, as a replacement target.

The processing unit 12 determines whether or not the first two-qubit gate 1c to be caused to act on the pair of two qubits serving as the measurement target of the X basis or the Y basis in the first observable has been already arranged in the third basis conversion circuit 3b. When the first two-qubit gate 1c has been already arranged, the processing unit 12 excludes the pair of qubits from the replacement target (cancellation of replacement) for the measurement result obtained by executing the first quantum circuit 1. By performing such cancellation of replacement, erroneous replacement of the measurement result is suppressed.

[Second Embodiment]

A second embodiment is a quantum computation system that may reduce an influence of errors on a computation result of quantum computation when quantum chemical computation by the VQE is performed by using a quantum computer.

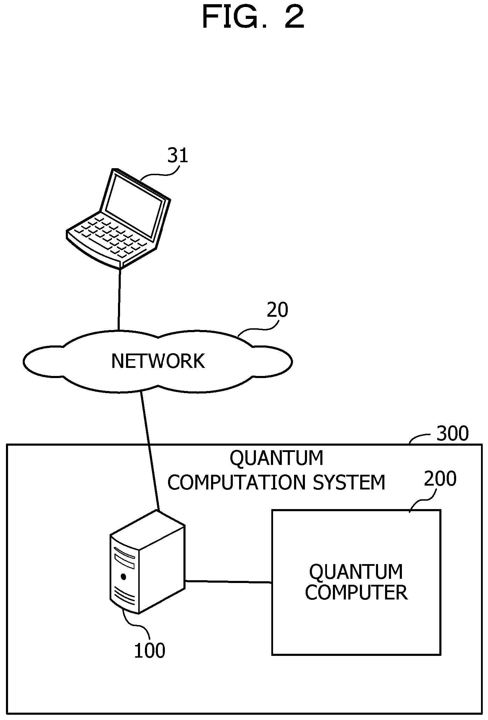

FIG. 2 is a diagram illustrating an example of a system configuration according to the second embodiment. In the second embodiment, a quantum computation system 300 and a terminal device 31 are coupled to each other via a network 20. In response to an operation by a user, the terminal device 31 transmits a quantum computation request to the quantum computation system 300.

The quantum computation system 300 includes a classical computer 100 and a quantum computer 200. The classical computer 100 and the quantum computer 200 are coupled to each other via a communication interface. The classical computer 100 is a Neumann-type computer, and performs processing such as generation of a quantum circuit and optimization of parameters used for computation of the quantum circuit. The quantum computer 200 is a computer that performs quantum chemical computation by performing an operation based on a quantum gate on a qubit. In accordance with the quantum circuit and the parameters generated by the classical computer 100, the quantum computer 200 performs quantum chemical computation of a VQE algorithm.

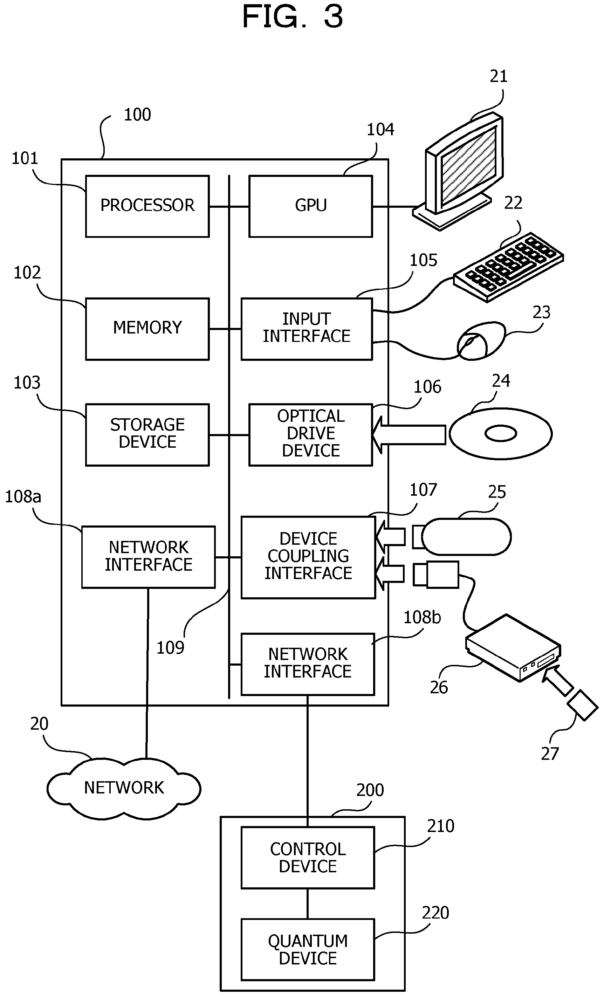

FIG. 3 is a diagram illustrating an example of hardware of devices constituting the quantum computation system. The entirety device of the classical computer 100 is controlled by a processor 101. A memory 102 and a plurality of peripheral devices are coupled to the processor 101 via a bus 109. The processor 101 may be a multiprocessor. The processor 101 is, for example, a central processing unit (CPU), a microprocessor unit (MPU), or a digital signal processor (DSP). At least a part of functions realized by the processor 101 executing a program may be realized by an electronic circuit such as an application-specific integrated circuit (ASIC) or a programmable logic device (PLD).

The memory 102 is used as a main storage device of the classical computer 100. The memory 102 temporarily stores at least a part of an operating system (OS) program or an application program to be executed by the processor 101. The memory 102 stores various types of data to be used for processing by the processor 101. As the memory 102, for example, a volatile semiconductor storage device such as a random-access memory (RAM) is used.

The peripheral devices coupled to the bus 109 include a storage device 103, a graphics processing unit (GPU) 104, an input interface 105, an optical drive device 106, a device coupling interface 107, and network interfaces 108a and 108b.

The storage device 103 writes and reads data electrically or magnetically to and from a built-in recording medium. The storage device 103 is used as an auxiliary storage device of the classical computer 100. The storage device 103 stores an OS program, an application program, and various types of data. As the storage device 103, for example, a hard disk drive (HDD) or a solid-state drive (SSD) may be used.

The GPU 104 is an arithmetic device that performs image processing. The GPU 104 is an example of a graphic controller. A monitor 21 is coupled to the GPU 104. The GPU 104 displays images on a screen of the monitor 21 in accordance with an instruction from the processor 101. As the monitor 21, there is a display device using organic electro luminescence (EL), a liquid crystal display device, or the like.

A keyboard 22 and a mouse 23 are coupled to the input interface 105. The input interface 105 transmits signals transmitted from the keyboard 22 and the mouse 23 to the processor 101. The mouse 23 is an example of a pointing device, and other pointing devices may be used. Examples of the other pointing devices include a touch panel, a tablet, a touch pad, a track ball, and the like.

The optical drive device 106 reads data recorded in an optical disc 24 or writes data to the optical disc 24 by using laser light or the like. The optical disc 24 is a portable-type recording medium in which data is recorded such that the data is readable by reflection of light. Examples of the optical disc 24 include a Digital Versatile Disc (DVD), a DVD-RAM, a compact disc read-only memory (CD-ROM), a CD-recordable (CD-R), a CD-rewritable (CD-RW), and the like.

The device coupling interface 107 is a communication interface for coupling the peripheral devices to the classical computer 100. For example, a memory device 25 and a memory reader and writer 26 may be coupled to the device coupling interface 107. The memory device 25 is a recording medium equipped with a function of communicating with the device coupling interface 107. The memory reader and writer 26 is a device that writes data to a memory card 27 or reads data from the memory card 27. The memory card 27 is a card-type recording medium.

The network interface 108a is coupled to the network 20. The network interface 108a transmits and receives data to and from another computer or a communication device via the network 20. The network interface 108a is, for example, a wired communication interface that is coupled to a wired communication device such as a switch or a router by a cable. The network interface 108a may be a wireless communication interface that is coupled, by radio waves, to and communicates with a wireless communication device such as a base station or an access point.

The network interface 108b is an interface for coupling to the quantum computer 200. The processor 101 transmits a quantum circuit to the quantum computer 200 via the network interface 108b and causes the quantum computer 200 to execute quantum computation. The processor 101 acquires a result of the quantum computation via the network interface 108b.

With the hardware as described above, the classical computer 100 may realize processing functions of the second embodiment. The information processing apparatus 10 described in the first embodiment may also be realized by substantially the same hardware as that of the classical computer 100 illustrated in FIG. 3.

For example, the classical computer 100 realizes the processing functions of the second embodiment by executing a program recorded in a computer-readable recording medium. The program in which a content of processing to be executed by the classical computer 100 is described may be recorded in various recording media. For example, the program to be executed by the classical computer 100 may be stored in the storage device 103. The processor 101 loads at least a part of the program in the storage device 103 to the memory 102, and executes the program. The program to be executed by the classical computer 100 may be recorded in a portable-type recording medium such as the optical disc 24, the memory device 25, or the memory card 27. For example, the program stored in the portable-type recording medium may be executed after being installed in the storage device 103 by the control from the processor 101. The processor 101 may read the program directly from the portable-type recording medium and execute the program.

The quantum computer 200 includes a control device 210 and a quantum device 220. The control device 210 executes a gate operation on a qubit in the quantum device 220 according to a quantum circuit. The quantum device 220 has a plurality of qubits. The quantum device 220 is, for example, a quantum processing unit (QPU).

By the classical computer 100 and the quantum computer 200 operating in cooperation with each other in the quantum computation system 300, quantum chemical computation by a VQE is performed.

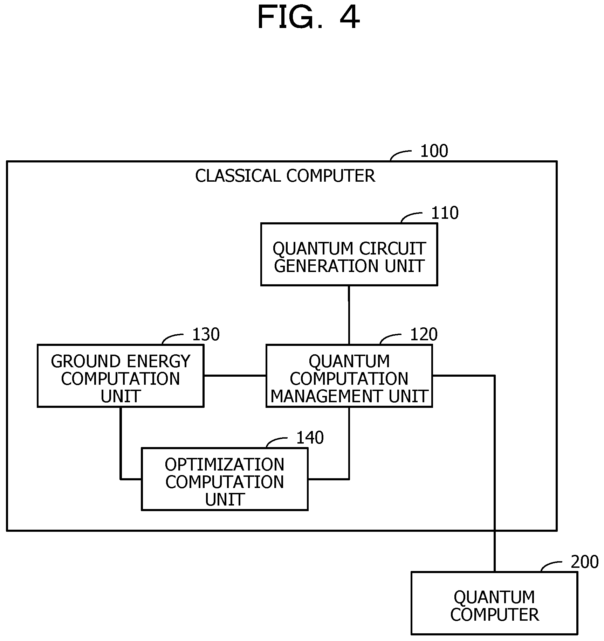

FIG. 4 is a block diagram illustrating an example of functions of a classical computer for quantum chemical computation by a VQE. The classical computer 100 includes a quantum circuit generation unit 110, a quantum computation management unit 120, a ground energy computation unit 130, and an optimization computation unit 140.

The quantum circuit generation unit 110 generates a quantum circuit for computing energy of a quantum multi-body system such as a molecule. For example, the quantum circuit generation unit 110 generates a quantum circuit by a VQE algorithm. The quantum circuit generation unit 110 transmits the generated quantum circuit to the quantum computation management unit 120.

The quantum computation management unit 120 instructs the quantum computer 200 to compute an observable based on the generated quantum circuit and measure a state of a qubit. For example, before the first quantum computation, the quantum computation management unit 120 sets initial values to values of a plurality of parameters $\theta$. The quantum computation management unit 120 acquires, from the quantum computer 200, information indicating a computation result of the observable based on the quantum circuit parameterized by the plurality of parameters $\theta$. The quantum computation management unit 120 instructs the quantum computer 200 to repeatedly compute the observable until a predetermined number of shots (the number of computations for obtaining a valid observable) is reached.

Based on the computation result of the observable, the ground energy computation unit 130 computes ground energy. For example, the ground energy computation unit 130 computes a Hamiltonian based on the repeatedly measured values of the observable. When the value of the Hamiltonian has converged, the ground energy computation unit 130 outputs this value of the Hamiltonian as the ground energy. When the value of the Hamiltonian has not converged, the ground energy computation unit 130 instructs the optimization computation unit 140 to optimize the parameters.

Based on information indicating a state of a qubit for parity check, the ground energy computation unit 130 may determine whether or not an error has occurred. When an error has occurred, the ground energy computation unit 130 discards the measurement value of the observable acquired simultaneously. By discarding the measurement value at the time of error occurrence in this manner, the influence of error is mitigated.

For each quantum computation, the optimization computation unit 140 updates all or some of the values of the plurality of parameters θ in a direction in which the energy value decreases. When the computation of the optimization ends, the optimization computation unit 140 notifies the quantum computation management unit 120 of the updated values of the plurality of parameters θ.

For example, the function of each element in the classical computer 100 illustrated in FIG. 4 may be realized by causing a computer to execute a program module corresponding to the element.

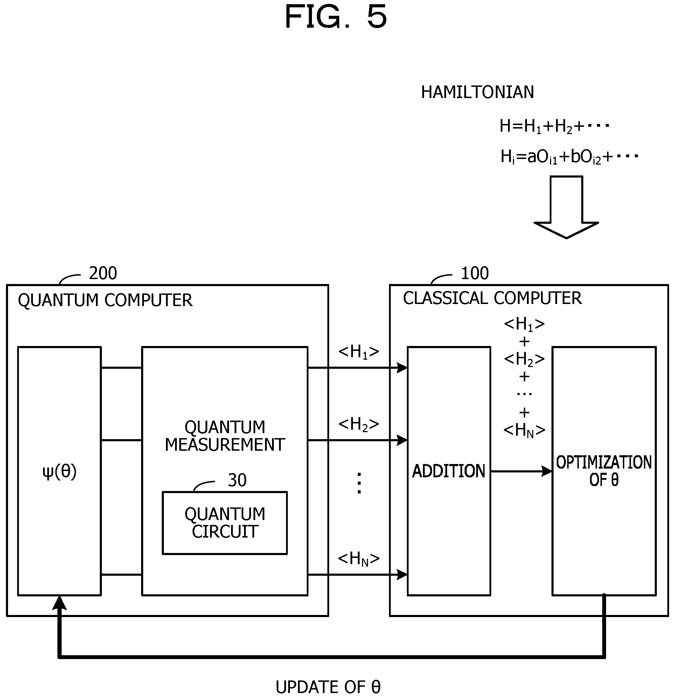

FIG. 5 is a diagram illustrating an example of quantum chemical computation by the VQE. In the quantum chemical computation by the VQE, the quantum computer 200 performs quantum measurement based on the initial values of the parameters θ (a set of variables of a circuit corresponding to electron excitation). For example, the quantum computer 200 calculates values of each of a plurality of divided Hamiltonians ($H_1$, $H_2$, ..., and $H_N$) in accordance with a quantum circuit (N is a natural number). An Ansatz circuit is included in a quantum circuit 30 used for the quantum measurement. The plurality of calculated Hamiltonians are added by the classical computer 100 to obtain an expected value of energy of the entire system. The optimization computation unit 140 in the classical computer 100 optimizes the parameters θ based on the expected value of the energy. For example, the optimization computation unit 140 updates the parameters θ in a direction in which the expected value of the energy decreases. After the parameters θ are updated, the quantum computer 200 computes the Hamiltonians based on the updated parameters θ again.

Such computation of the Hamiltonians and update of the parameters θ are repeated until the ground energy is obtained.

Energy E to be obtained in the ground energy computation of a molecule by the VQE is represented by Expression (1) below.

$$E = \langle H \rangle = \frac{\langle \varphi(\vec{\theta}) | H | \varphi(\vec{\theta}) \rangle}{\varphi(\vec{\theta}) | \varphi(\vec{\theta})} \qquad (1)$$

φ indicates a quantum state. H indicates a Hamiltonian. The Hamiltonian is a function of an intermolecular distance R. θ is a rotation angle used as an optimization variable. The ground energy is a lowest energy. Thus, when the rotation angle θ is varied and Expression (1) is repeatedly computed, the lowest energy among the energies obtained by the plurality of computations becomes ground energy $E_0$. The expression representing the ground energy $E_0$ is as follows.

$$\frac{\langle \varphi(\vec{\theta}) | H | \varphi(\vec{\theta}) \rangle}{\varphi(\vec{\theta}) | \varphi(\vec{\theta})} \geq E_0 \qquad (2)$$

In actual computation, the Hamiltonian is decomposed into a sum form ($H = H_1 + H_2 + ...$), and each of the decomposed Hamiltonians is computed. For example, for each of the decomposed Hamiltonians, the quantum circuit generation unit 110 generates a quantum circuit for performing quantum chemical computation by the VQE.

Each Hamiltonian $H_i$ (i = 1, 2, and ...) after the decomposition is a sum "$H_i = aO_{i1} + bO_{i2} + ...$" of real number multiples of observables measurable by one quantum circuit (a and b are real numbers). $O_{i1}$, $O_{i2}$, and ... are observables of an i-th Hamiltonian. The observables are represented as $Z_0$, $X_0Z_1X_2$. $Z_0$ is a measurement result of a Z basis of a 0th qubit. $X_0Z_1X_2$ is a tensor product of a measurement result of an X basis of the 0th qubit, a measurement result of a Z basis of a first qubit, and a measurement result of an X basis of a second qubit.

Quantum circuits constituting the VQE include a circuit called Ansatz. Ansatz occupies most of the VQE quantum circuit. Ansatz is a circuit for expressing a wave function $\psi(\theta)$ parameterized by variables in the quantum circuit.

In the VQE, a state indicating whether or not an up-spin electron is present in one molecular orbital is represented by one qubit. A state indicating whether or not a down-spin electron is present in that molecular orbital is represented by another qubit. Each qubit is in a state "1" when a spin electron for the corresponding molecular orbital is present, and in a state "0" when no electron is present. The state indicating the presence or absence of the up-spin electron in the molecular orbital and the state indicating the presence or absence of the down-spin electron in the molecular orbital are allocated to adjacent qubits in the quantum circuit. For example, up-spin electrons are allocated to even-numbered qubits (even qubits), and down-spin electrons are allocated to odd-numbered qubits (odd qubits).

The influence of errors in the VQE computation using the quantum computer 200 will be described. Errors that affect a computation result include a thermal relaxation error, a gate operation error, a readout error, and the like. The thermal relaxation error is an error in which the quantum state is lost over time and returns to an initial state |0>. The gate operation error is an error that occurs because a gate operation does not have ideal accuracy, and causes a deviation from an intended operation with respect to a state of a qubit. The readout error is an error that occurs at the time of measurement after the gate processing, and due to this error, there is a possibility that the |0> state is misread as |1> or the | 1> state is misread as |0>.

Due to the influence of these errors, an error occurs in the computation result of the quantum computation. In computation over the NISQ without an error correction function, this influence is fatal. Accordingly, it is important to mitigate the influence of errors as much as possible.

The influence of errors in the VQE may be reduced by an error mitigation function such as a parity check. However, in the VQE, a plurality of quantum circuits are executed due to its algorithm, and influences of hardware errors are different in the individual quantum circuits. When the influences of errors are different from each other, the error mitigation function included in the VQE may not work well. When the error mitigation function does not work correctly, the influence of errors largely remains in a final computed value (ground energy).

Accordingly, in the quantum computation system 300, a reduction in the influence of errors is realized without using auxiliary qubits of a plurality of quantum circuits. For example, the quantum computation system 300 unifies the basis conversion circuits of the plurality of quantum circuits as much as possible.

The basis conversion circuit is a circuit that converts an output of Ansatz so that a Z basis (computation basis), an X basis (Hadamard basis), or a Y basis (circular basis) included as elements in an observable to be computed may be measured. In the quantum computer 200, only the Z basis may be measured in a hardware manner. Therefore, when the X basis or the Y basis is measured, the state of the qubit is converted so that the states of those bases may be projected onto a Z axis, for example, the Z basis, and then the Z basis is measured.

Among a plurality of observables to be computed in a case where the Hamiltonian of the VQE is divided into a plurality of Hamiltonians, there are observables that may be simultaneously measured by a common quantum circuit. When the simultaneously measurable observables are measured at once by the same quantum circuit in the computation of the VQE, the computation of the ground energy by the VQE is efficient. When the simultaneously measurable observables are measured by a common quantum circuit, basis conversion using a two-qubit gate or a one-qubit gate is performed in a basis conversion circuit corresponding to the observables to be measured.

For example, when a Hamiltonian to be computed, which is generated under Jordan-Wigner transform, is decomposed into an observable form, the observable is divided into the following three patterns.

[Pattern 1] observable composed only of a tensor product of Z and I (I is an identity operator)

[Pattern 2]

$(X \text{ or } Y)_k Z_{k+1} \dots Z_{l-1}(X \text{ or } Y)_l Z_p (X \text{ or } Y)_k Z_{k+1} \dots Z_{l-1}(X \text{ or } Y)_l$
$(X \text{ or } Y)_k Z_{k+1} \dots Z_{l-1}(X \text{ or } Y)_l Z_p$

[Pattern 3]

$(X \text{ or } Y)_k Z_{k+1} \dots Z_{l-1}(X \text{ or } Y)_l (X \text{ or } Y)_p Z_{p+1} \dots Z_{q-1}(X \text{ or } Y)_q$
k, 1, p, and q are integers equal to or greater than 0 indicating qubit numbers in the quantum circuit. In the case of the "pattern 2", the notation "$Z_{k+1} \dots Z_{l-1}$" indicates the succession of an odd number of Zs. For example, in the "pattern 2", when k is an even number, l is also an even number, and when k is an odd number, l is also an odd number.

In the case of the "pattern 3", the notations "$Z_{k+1} \dots Z_{l-1}$" and "$Z_{p+1} \dots Z_{q-1}$" indicate the succession of an even number of Zs. For example, in the "pattern 3", when k is an even number, p is also an even number, and l and p are odd numbers. In the "pattern 3", when k is an odd number, p is also an odd number, and l and p are even numbers.

Among the observables of these three patterns, those that are commutative (satisfying an exchange relationship) may be measured simultaneously. Satisfying the exchange relationship means that Pauli matrices corresponding to the qubits having the same qubit number in the two individual observables satisfy "$\sigma_i\sigma_j - \sigma_j\sigma_i = 0$". $\sigma$ is a Pauli matrix (such as $\sigma_x$). When both are the same Pauli matrix, they are exchangeable. When one of them is I, they are exchangeable. When both are any of X, Y, and Z and are different Pauli matrices, they are not exchangeable.

The phrase "observables being commutative as a whole" means that Pauli matrices for qubits having the same number are compared with each other to determine whether it is exchangeable or unexchangeable, and the number of cases where it is unexchangeable is an even number. For example, when "$I_0Y_1X_2$" and "$Z_0Z_1Z_2$" are considered, "$I_0Z_0 = Z_0I_0$" (exchangeable), "$Y_1Z_1 = -Z_1Y_1$" (unexchangeable), and "$X_2Z_2 = -Z_2X_2$" (unexchangeable). In this case, since there are two cases where it is unexchangeable, it is "$I_0Y_1X_2Z_0Z_1Z_2 = Z_0Z_1Z_2I_0Y_1X_2$" as a whole, and it is exchangeable.

For example, the quantum circuit generation unit 110 decomposes the Hamiltonian into groups that may be simultaneously measured as follows.

[Regarding Pattern 1]

The quantum circuit generation unit 110 treats all the observables composed only of Z as the same group.

[Regarding Pattern 2]

The pattern 2 is an observable represented by any of "$(X \text{ or } Y)_kZ_{k+1} ... Z_{l-1}(X \text{ or } Y)_l$", "$Z_p(X \text{ or } Y)_kZ_{k+1} ... Z_{l-1}(X \text{ or } Y)_l$", and "$(X \text{ or } Y)_kZ_{k+1} ... Z_{l-1}(X \text{ or } Y)_lZ_p$".
Among the observables of the pattern 2, the quantum circuit generation unit 110 sets a plurality of observables in which the qubit (k, 1) for measuring the X basis or the Y basis is common and the measurement content is XX or YY, as the same group. For example, the quantum circuit generation unit 110 sets "$X_0Z_1X_2$" and "$Y_0Z_1Y_2$" as the same group. "$X_0Z_1Z_2X_3$" is different from the group described above in one of the qubits for measuring the X basis or the Y basis. Therefore, the quantum circuit generation unit 110 sets "$X_0Z_1Z_2X_3$" as a group different from the group $\{X_0Z_1X_2, Y_0Z_1Y_2\}$.
Among the observables of the pattern 2, the quantum circuit generation unit 110 sets a plurality of observables in which the qubit (k, 1) for measuring the X basis or the Y basis is common and the measurement content is XY or YX, as the same group.

[Regarding Pattern 3]

The pattern 3 is observables represented by "$(X \text{ or } Y)_kZ_{k+1} ... Z_{l-1}(X \text{ or } Y)_l(X \text{ or } Y)_pZ_{p+1} ... Z_{q-1}(X \text{ or } Y)_q$".
Among the observables of the pattern 3, the quantum circuit generation unit 110 sets the observables having the same k, l, p, and q and being commutative as a whole, as the same group.
To simultaneously measure a plurality of observables, the quantum circuit generation unit 110 adds a basis conversion circuit using a two-qubit gate so that a result of a tensor product of states of a plurality of qubits may be measured as a state of one qubit.

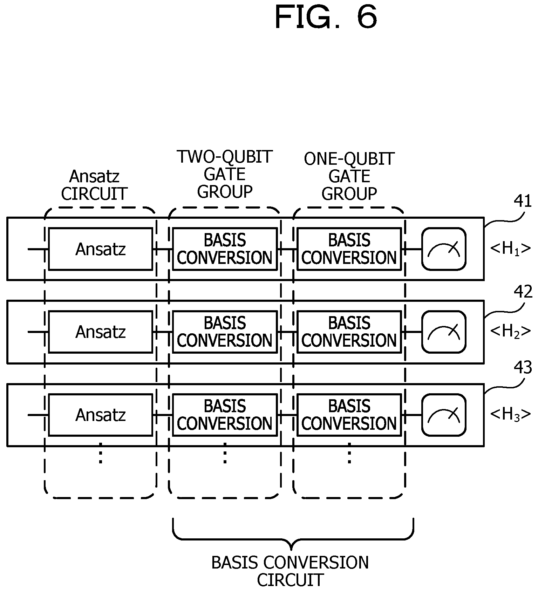

FIG. 6 is a diagram illustrating an example of a quantum circuit configuration for VQE computation. Quantum circuits 41, 42, 43, and ... are prepared for the respective divided Hamiltonians. The quantum circuits 41, 42, 43, and ... include a common Ansatz circuit. In each of the quantum circuits 41, 42, 43, and ..., a basis conversion circuit corresponding to an observable to be computed is added after the Ansatz circuit. The basis conversion circuit is divided into a portion of a two-qubit gate group and a portion of a one-qubit gate group.

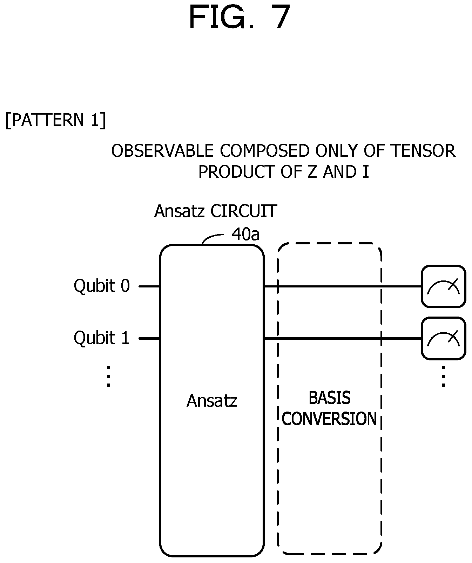

FIG. 7 is a diagram illustrating an example of processing of adding a basis conversion circuit for an observable of "pattern 1". When the observable of "pattern 1" is measured, Z measurement is performed on all the qubits after execution of an Ansatz circuit 40a, whereby the observable may be obtained from the measurement result. Thus, a basis conversion circuit is not to be added.

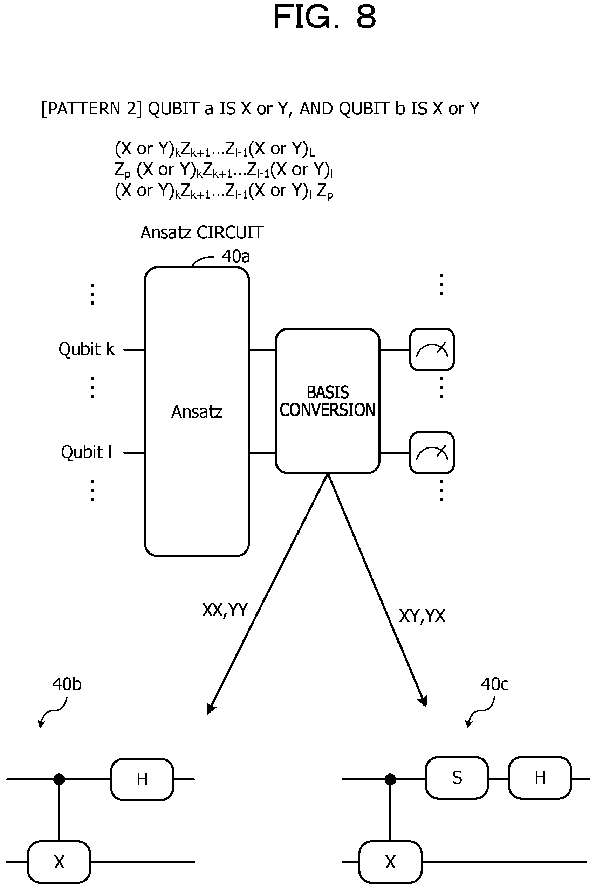

FIG. 8 is a diagram illustrating an example of processing of adding a basis conversion circuit for an observable of "pattern 2". In a case of the observable of "pattern 2", the basis conversion circuit after the Ansatz circuit 40a is different between a case where a measurement target of a qubit pair of a k-th qubit and an l-th qubit is "XX" or "YY" and a case where the measurement target of the qubit pair of the k-th qubit and the l-th qubit is "XY" or "YX".
When the measurement target of the qubit pair is "XX" or "YY", a basis conversion circuit 40b is added. In the basis conversion circuit 40b, a CNOT gate is arranged for the k-th qubit and the l-th qubit, and a Hadamard gate is arranged on a control qubit side of the CNOT gate.
When the basis conversion circuit 40b is added, the measurement result of the qubit on the control qubit side of the CNOT gate is "XX", and the measurement result of the qubit on a target qubit side of the CNOT gate is "ZZ". "YY" may be calculated by an expression "YY = -(xx)(zz)" based on the measurement results of the basis conversion circuit 40b.
When the measurement target of the qubit pair is "XY" or "YX", a basis conversion circuit 40c is added. In the basis conversion circuit 40c, a CNOT gate is arranged for the k-th qubit and the l-th qubit, and a phase shift gate (S gate) and a Hadamard gate are arranged on the control qubit side of the CNOT gate.
When the basis conversion circuit 40c is added, the measurement result of the qubit on the control qubit side of the CNOT gate is "XY", and the measurement result of the qubit on the target qubit side of the CNOT gate is "ZZ". "YX" may be calculated based on the measurement result of the basis conversion circuit 40c.

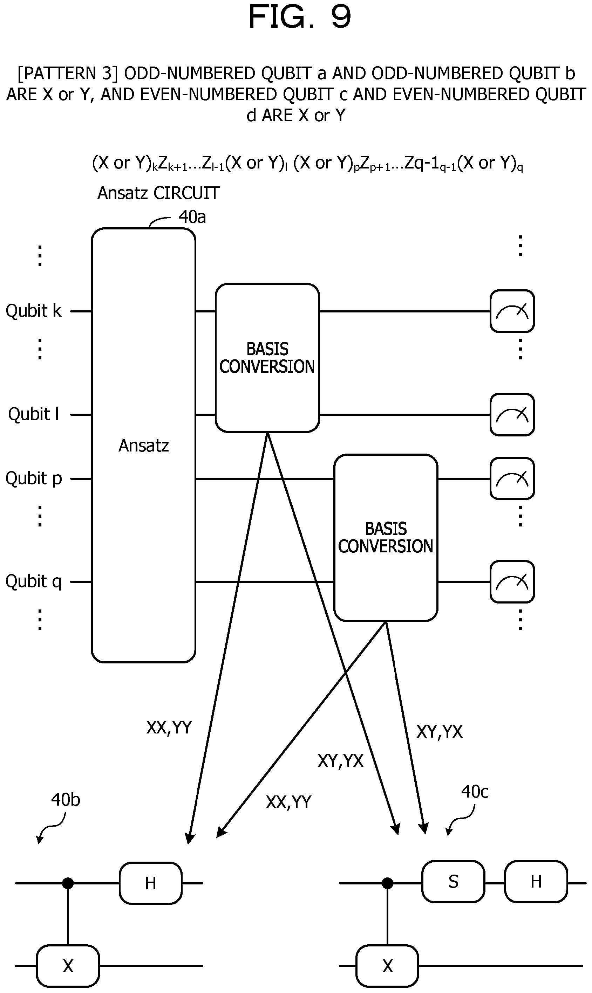

FIG. 9 is a diagram illustrating an example of processing of adding a basis conversion circuit for an observable of "pattern 3". In a case of the observable of "pattern 3", the k-th qubit and a p-th qubit are a qubit pair for which the basis conversion circuit is added. The l-th qubit and a q-th qubit are also a qubit pair for which the basis conversion circuit is added. When the measurement target of each qubit pair is "XX" or "YY", the basis conversion circuit 40b is added. When the measurement target of each qubit pair is "XY" or "YX", the basis conversion circuit 40c is added.

As illustrated in FIGs. 7 to 9, a basis conversion circuit including a CNOT gate is added in order to simultaneously measure the simultaneously measurable observable group by one quantum circuit. The one-qubit gate in the basis conversion circuit is less affected by noise than a two-qubit gate such as the CNOT gate. Therefore, when the configuration of the CNOT gate in the basis conversion circuit may be made common, the influence of noise in the quantum circuit corresponding to each group including the simultaneously measurable observable group may be equalized.

To make the configuration of the CNOT gate in the basis conversion circuit common, the quantum circuit generation unit 110 adds an originally unnecessary CNOT gate to the quantum circuit of any of the groups. When such a CNOT gate is added, the ground energy computation unit 130 performs replacement of the measurement result for each qubit.

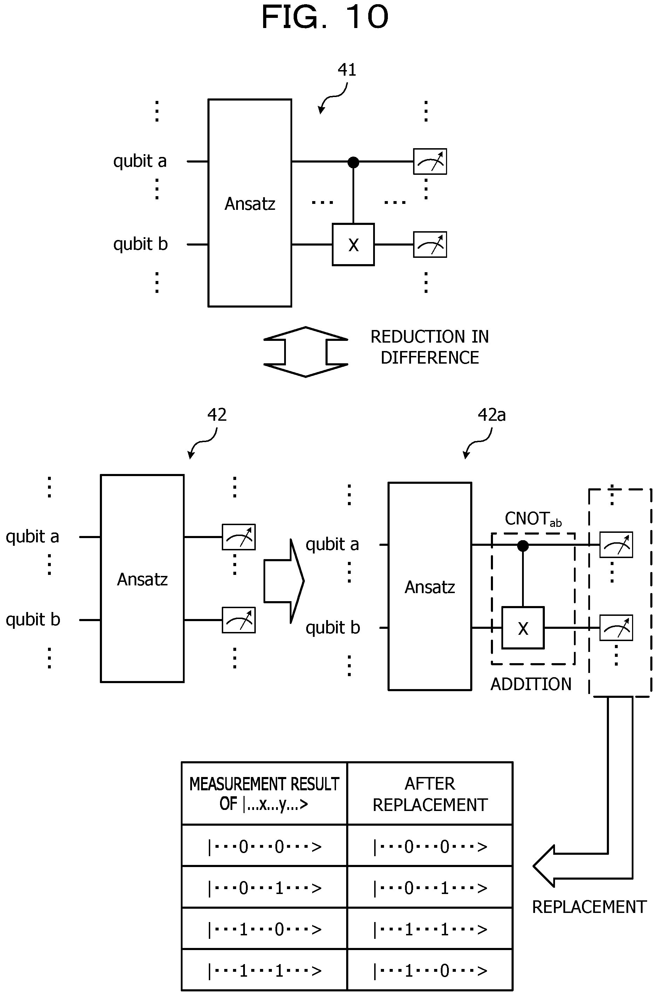

FIG. 10 is a diagram illustrating an example of replacement of a measurement result accompanied by addition of a CNOT gate. For example, it is assumed that one CNOT gate ($CNOT_{ab}$) is included in the basis conversion circuit of the quantum circuit 41 of one group of two groups of simultaneously measurable observables, and no CNOT gate is included in the basis conversion circuit of the quantum circuit 42 of the other group. In this case, by adding the same CNOT gate ($CNOT_{ab}$) as that of the quantum circuit 41 to the quantum circuit 42, the difference in configuration between the quantum circuit 41 and the quantum circuit 42 is reduced.

With a quantum circuit 42a after the addition of the CNOT gate, the measurement result is different from that before the addition of the CNOT gate. Accordingly, the ground energy computation unit 130 replaces the measurement result of the quantum circuit 42a in accordance with the added CNOT gate. It is assumed that a qubit number of a control qubit of the added CNOT gate is "a" and a qubit number of a target qubit is "b". In this case, when the measurement result of the qubit number "a" is |0>, the measurement result is used as it is. When the measurement result of the qubit number "a" is |1>, the measurement result |0> of the qubit number "b" is replaced with |1>, and the measurement result |1> of the qubit number "b" is replaced with |0>.

When the measurement result of the qubit having the qubit number "a" is denoted by |x> and the measurement result of the qubit having the qubit number "b" is denoted by |y>, the state of all the qubits may be represented by |...x...y...>. The replacement in this case is as follows. 1...0...0...> → 1...0...0...> 1...0...1...> → 1...0...1...> 1...1...0...> → 1...1...1...> 1...1...1...> → 1...1...0...>

With the quantum circuit generation unit 110, the configurations of the two-qubit gate groups of the basis conversion circuit are unified as much as possible. In the case of the quantum circuits having the same two-qubit gate group of the basis conversion circuit, the influence of errors is considered to be substantially the same. Even when the two-qubit gate groups of the basis conversion circuit are not identical to each other, the difference in the influence of errors is small as long as the two-qubit gate groups are approximate to each other.

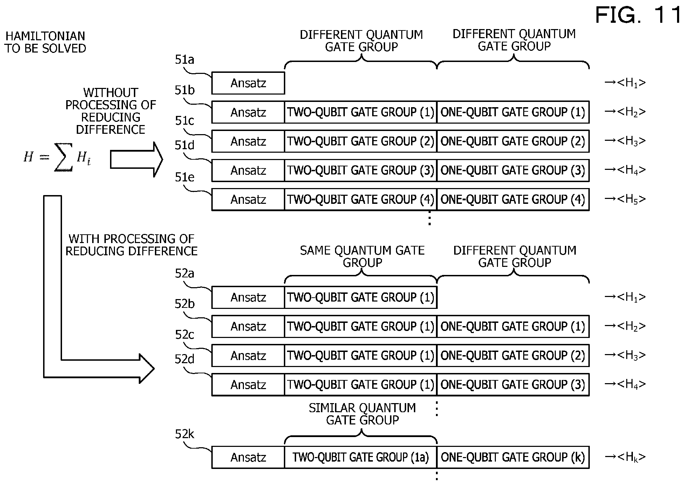

FIG. 11 is a diagram illustrating an example of a quantum circuit for each divided Hamiltonian. The quantum circuit generation unit 110 divides the Hamiltonian such that simultaneously measurable observables are collected into one Hamiltonian. When the processing of reducing the difference in configuration for each Hamiltonian is not performed, quantum circuits 51a, 51b, 51c, 51d, 51e, and ... for each of the divided Hamiltonians are generated. While the quantum circuits 51a, 51b, 51c, 51d, 51e, and ... have the same Ansatz circuit, they are different from each other in the two-qubit gate group and the one-qubit gate group.

When the processing of reducing the difference in configuration for each Hamiltonian is performed, quantum circuits 52a, 52b, 52c, 52d, ..., 52k, and ... are generated. The quantum circuits 52a, 52b, 52c, 52d, and ... have the same Ansatz circuit and the same two-qubit gate group. While the one-qubit gate groups of the quantum circuits 52a, 52b, 52c, 52d, and ... are different from each other, the influence of errors of the one-qubit gate is smaller than that of the two-qubit gate.

While the two-qubit gate group of the quantum circuits 52k and ... is different from that of the quantum circuits 52a, 52b, 52c, 52d, and ..., they have similar configurations. Therefore, as compared with the case where the processing of reducing the difference in configuration is not performed, the influences of errors of the quantum circuits 52a, 52b, 52c, 52d, and ..., and the quantum circuits 52k and ... are small.

The reason why the influence of errors is reduced by reducing the difference between the quantum circuits may be described as follows.

A case where there is one group after the Hamiltonian division will be considered. In this case, it is assumed that a wave function |ψ(θ)> becomes |ψ'(θ')> as a result of being affected by an error (θ and θ' are parameters of real numbers). At this time, obtained energy is "E'(θ') = <ψ'(θ') | H | ψ'(θ')>". Although " | ψ'> ≠ | ψ>", variational spaces are substantially the same. Thus, when variation computation is performed, "E'(θ') ≈ E(θ)" is satisfied.

A case where there are two groups after the Hamiltonian division and the quantum circuits between the groups are significantly different will be considered. When the quantum circuits are different, the influences of errors are also different, and the wave function $|\psi(\theta)\rangle$ becomes "$|\psi_1'(\theta_1')\rangle$" in the first quantum circuit and becomes "$|\psi_2'(\theta_2')\rangle$" in the second quantum circuit ($\theta_1'$ and $\theta_2'$ are parameters of real numbers). In this case, "$E'(\theta') = \langle\psi_1'(\theta_1')|H_1|\psi_1'(\theta_1')\rangle + \langle\psi_2'(\theta_2')|H_2|\psi_2'(\theta_2')\rangle$" is satisfied.

In this example, there are two types of parameters, $\theta_1'$ and $\theta_2'$, and optimization is difficult.

When the quantum circuits between the groups are the same except for the one-qubit gate group of the basis conversion circuit, $|\psi_1''(\theta_1'')\rangle$ is satisfied for the wave functions of both the first quantum circuit and the second quantum circuit. At this time, "$E''(\theta'') = \langle\psi_1''(\theta_1'')|H_1|\psi_1''(\theta_1'')\rangle + \langle\psi_1''(\theta_1'')|H_2|\psi_1''(\theta_1'')\rangle$" is satisfied ($\theta_1''$ is a parameter of a real number). Since there is only one type of parameter, $\theta_1''$, both groups may be optimized and successfully led to the minimum value.

Hereinafter, a computation procedure of the VQE in which the influence of noise is reduced will be described in detail.

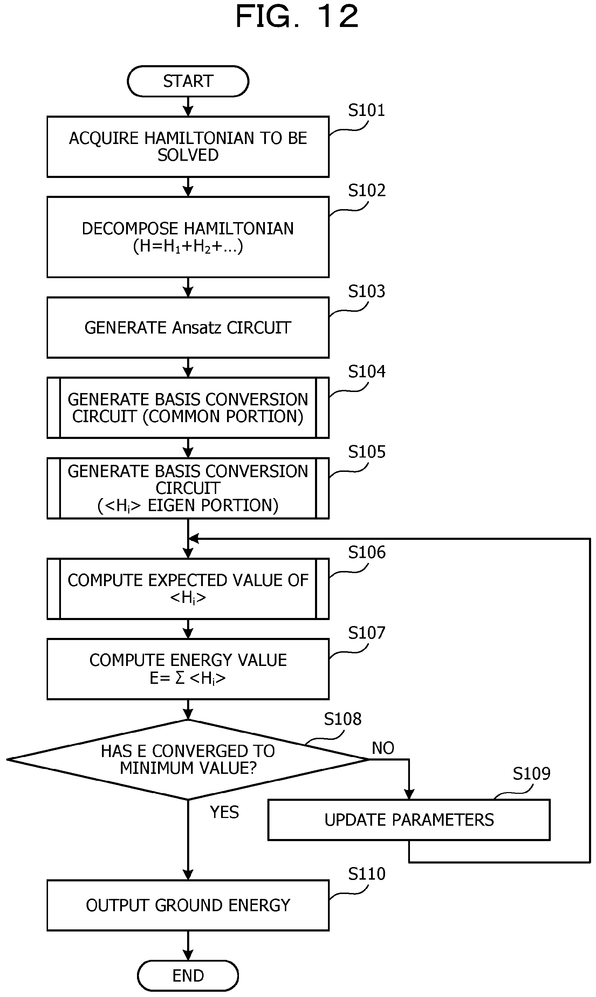

FIG. 12 is a flowchart illustrating an example of a procedure of the VQE computation processing. The processing illustrated in FIG. 12 will be described below in accordance with step numbers.

[Step S101] The quantum computation management unit 120 acquires a Hamiltonian to be solved from the terminal device 31. The quantum computation management unit 120 instructs the quantum circuit generation unit 110 to generate a quantum circuit for computing the Hamiltonian.

[Step S102] The quantum circuit generation unit 110 decomposes a Hamiltonian H into "$H = H_1 + H_2 + ...$". For example, the quantum circuit generation unit 110 obtains a plurality of observables for computing the Hamiltonian H and groups simultaneously measurable observables into the same group. For each group of observables, the quantum circuit generation unit 110 generates a Hamiltonian obtained from the observables.

[Step S103] The quantum circuit generation unit 110 generates an Ansatz circuit common to all the Hamiltonians after decomposition.

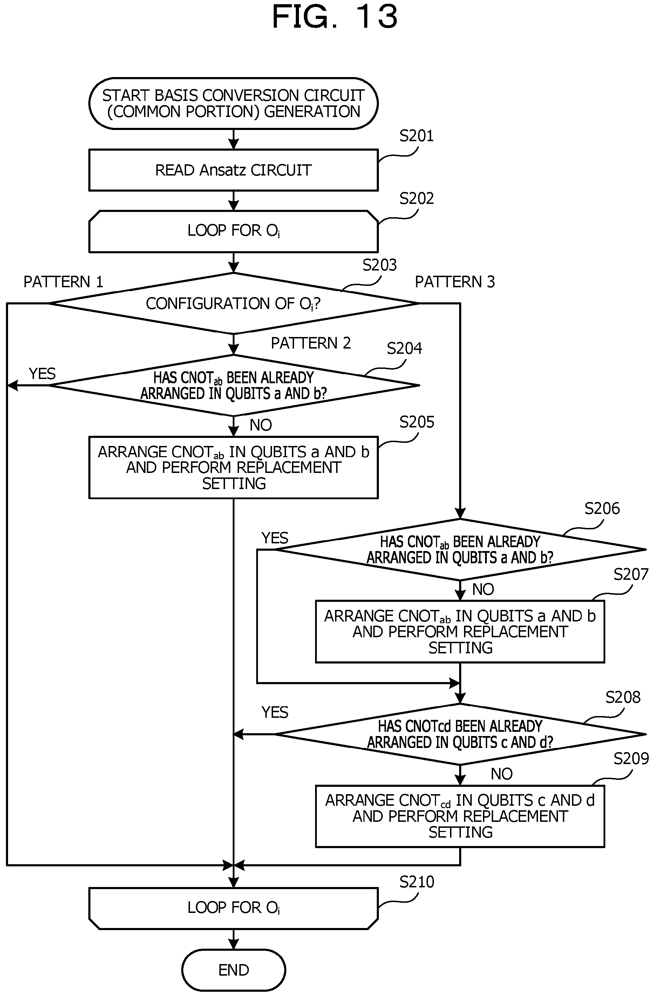

[Step S104] The quantum circuit generation unit 110 generates a common portion of a basis conversion circuit. Details of the basis conversion circuit (common portion) generation processing will be described later (see FIG. 13).

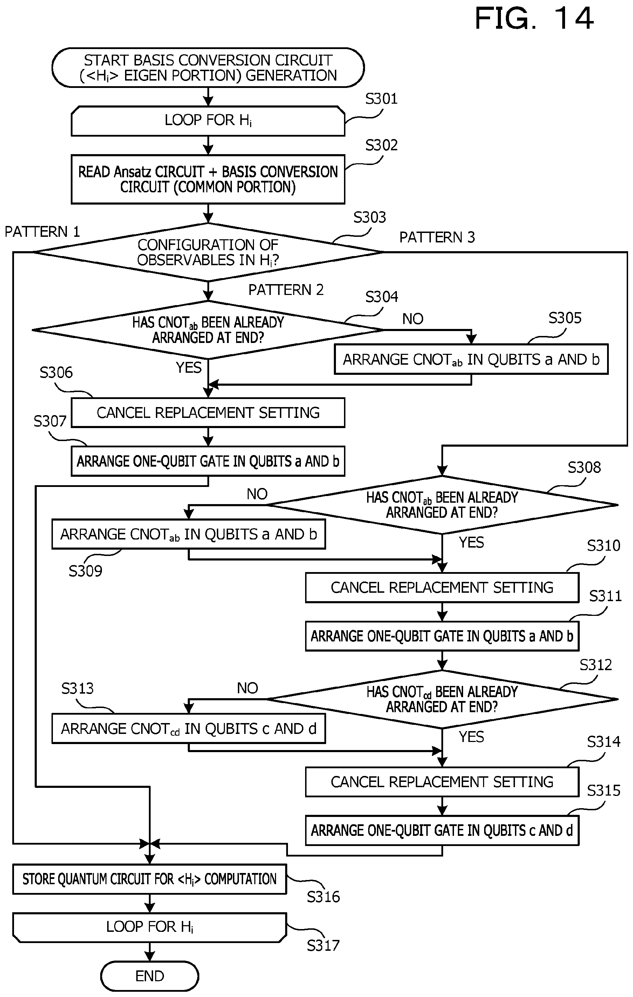

[Step S105] The quantum circuit generation unit 110 generates a Hamiltonian $\langle H_i\rangle$ eigen portion of the basis conversion circuit. Details of the basis conversion circuit ($\langle H_i\rangle$ eigen portion) generation processing will be described later (see FIG. 14).

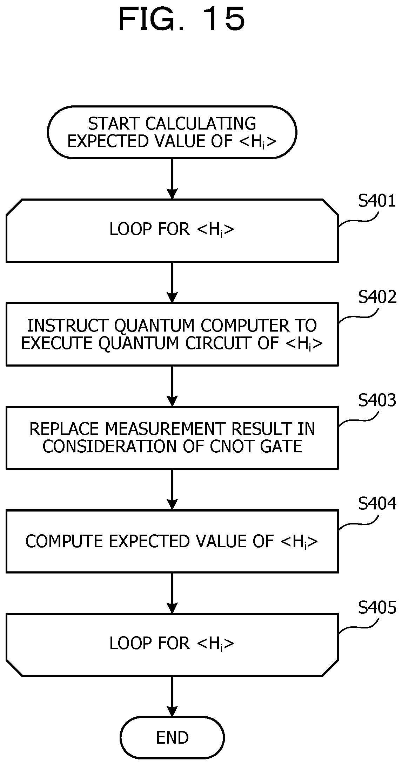

[Step S106] By causing the quantum computer 200 to execute the quantum circuit for each generated Hamiltonian, the quantum computation management unit 120 computes an expected value of each divided Hamiltonian $\langle H_i\rangle$. Details of the procedure of the expected value computation processing for $\langle H_i\rangle$ will be described later (see FIG. 15).

[Step S107] Based on the expected value of each Hamiltonian $\langle H_i\rangle$, the ground energy computation unit 130 computes an energy value "$E = \Sigma\langle H_i\rangle$".

[Step S108] The ground energy computation unit 130 determines whether or not the energy E has converged to the minimum value. For example, when the difference between the previous value of the energy E and the most recent value of the energy E is equal to or smaller than a predetermined threshold value, the ground energy computation unit 130 determines that the energy E has converged. When the energy E has converged, the ground energy computation unit 130 advances the processing to step S110. When the energy E has not converged, the ground energy computation unit 130 advances the processing to step S109.

[Step S109] The optimization computation unit 140 updates parameters $\theta$ in a direction in which the expected value of the energy decreases. For example, the optimization computation unit 140 updates the values of the parameters $\theta$ by a method such as a gradient method. After that, the optimization computation unit 140 advances the processing to step S106.

[Step S110] The quantum computation management unit 120 outputs the value of the energy E computed last by the ground energy computation unit 130 as ground energy. For example, the quantum computation management unit 120 transmits the ground energy to the terminal device 31.

Next, generation processing of the common portion of the basis conversion circuit will be described in detail.

FIG. 13 is a flowchart illustrating an example of a procedure of a basis conversion circuit (common portion) generation processing. The processing illustrated in FIG. 13 will be described below in accordance with step numbers.

[Step S201] The quantum circuit generation unit 110 reads an Ansatz circuit.

[Step S202] The quantum circuit generation unit 110 executes processing in steps S203 to S209 for each observable. While sequentially counting up a loop variable i from 1, the quantum circuit generation unit 110 executes the processing for an i-th observable $O_i$, for example.

[Step S203] The quantum circuit generation unit 110 determines a configuration of the observable $O_i$. When the configuration of the observable $O_i$ corresponds to the pattern 1, the quantum circuit generation unit 110 advances the processing to step S210. When the configuration of the observable $O_i$ corresponds to the pattern 2, the quantum circuit generation unit 110 advances the processing to step S204. When the configuration of the observable $O_i$ corresponds to the pattern 3, the quantum circuit generation unit 110 advances the processing to step S206.

[Step S204] The quantum circuit generation unit 110 determines whether or not a CNOT gate ($CNOT_{ab}$) for two qubits "qubit a" and "qubit b" for measuring the X or Y basis in the observable $O_i$ has been already arranged. When $CNOT_{ab}$ has been already arranged, the quantum circuit generation unit 110 advances the processing to step S210. When $CNOT_{ab}$ has not been arranged, the quantum circuit generation unit 110 advances the processing to step S205.

[Step S205] The quantum circuit generation unit 110 arranges $CNOT_{ab}$ having "qubit a" as a control qubit and "qubit b" as a target qubit in the basis conversion circuit. At this time, the quantum circuit generation unit 110 sets "qubit a" and "qubit b" as a qubit pair for which the measurement result is to be replaced.

[Step S206] The quantum circuit generation unit 110 determines whether or not a CNOT gate ($CNOT_{ab}$) for two odd-numbered qubits "qubit a" and "qubit b" for measuring the X or Y basis in the observable $O_i$ has been already arranged. When $CNOT_{ab}$ has been already arranged, the quantum circuit generation unit 110 advances the processing to step S208. When $CNOT_{ab}$ has not been arranged, the quantum circuit generation unit 110 advances the processing to step S207.

[Step S207] The quantum circuit generation unit 110 arranges $CNOT_{ab}$ having "qubit a" as a control qubit and "qubit b" as a target qubit in the basis conversion circuit. At this time, the quantum circuit generation unit 110 sets "qubit a" and "qubit b" as a qubit pair for which the measurement result is to be replaced.

[Step S208] The quantum circuit generation unit 110 determines whether or not a CNOT gate ($CNOT_{cd}$) for two even-numbered qubits "qubit c" and "qubit d" for measuring the X or Y basis in the observable $O_i$ has been already arranged. When $CNOT_{cd}$ has been already arranged, the quantum circuit generation unit 110 advances the processing to step S210. When $CNOT_{cd}$ has not been arranged, the quantum circuit generation unit 110 advances the processing to step S209.

[Step S209] The quantum circuit generation unit 110 arranges $CNOT_{cd}$ having "qubit c" as a control qubit and "qubit d" as a target qubit in the basis conversion circuit. At this time, the quantum circuit generation unit 110 sets "qubit c" and "qubit d" as a qubit pair for which the measurement result is to be replaced.

[Step S210] When the processing in steps S203 to S209 ends for all the observables, the quantum circuit generation unit 110 ends the basis conversion circuit (common portion) generation processing.

Following the common portion of the basis conversion circuit generated as described above, eigen portion generation processing for each of the divided Hamiltonians is performed.

FIG. 14 is a flowchart illustrating an example of a procedure of basis conversion circuit ($<H_i>$ eigen portion) generation processing. Hereinafter, the processing illustrated in FIG. 14 will be described in accordance with step numbers.

[Step S301] With respect to each of the divided Hamiltonians $<H_i>$, the quantum circuit generation unit 110 executes processing in steps S302 to S316.

[Step S302] As a quantum circuit for $<H_i>$, the quantum circuit generation unit 110 reads the circuit obtained by adding the basis conversion circuit (common portion) to the Ansatz circuit. While sequentially counting up a loop variable i from 1, the quantum circuit generation unit 110 executes the processing for an i-th Hamiltonian $<H_i>$, for example.

[Step S303] The quantum circuit generation unit 110 determines a configuration of the observables in $<H_i>$. When the configuration of the observables corresponds to the pattern 1, the quantum circuit generation unit 110 advances the processing to step S316. When the configuration of the observables corresponds to the pattern 2, the quantum circuit generation unit 110 advances the processing to step S304. When the configuration of the observables corresponds to the pattern 3, the quantum circuit generation unit 110 advances the processing to step S308.

[Step S304] The quantum circuit generation unit 110 determines whether or not the CNOT gate ($CNOT_{ab}$) for the two qubits "qubit a" and "qubit b" for measuring the X or Y basis in the observables in $<H_i>$ has been already arranged at the end of the common portion of the basis conversion circuit. When $CNOT_{ab}$ has been already arranged, the quantum circuit generation unit 110 advances the processing to step S306. When $CNOT_{ab}$ has not been arranged, the quantum circuit generation unit 110 advances the processing to step S305.

[Step S305] The quantum circuit generation unit 110 arranges $CNOT_{ab}$ having "qubit a" as a control qubit and "qubit b" as a target qubit at the end of the basis conversion circuit for $<H_i>$.

[Step S306] The quantum circuit generation unit 110 cancels replacement setting of the measurement result for the qubit pair of the qubits "qubit a" and "qubit b".

[Step S307] The quantum circuit generation unit 110 arranges a one-qubit gate corresponding to the observable to be measured in the qubits "qubit a" and "qubit b" to be operated by the arranged $CNOT_{ab}$. For example, when "XX" or "YY" is measured, the quantum circuit generation unit 110 adds a Hadamard gate to the control qubit side of the added $CNOT_{ab}$. When "XY" or "YX" is measured, the quantum circuit generation unit 110 adds an S gate and a Hadamard gate to the control qubit side of the added $CNOT_{ab}$. After that, the quantum circuit generation unit 110 advances the processing to step S316.

[Step S308] The quantum circuit generation unit 110 determines whether or not the CNOT gate ($CNOT_{ab}$) for the two odd-numbered qubits "qubit a" and "qubit b" for measuring the X or Y basis in the observables in $<H_i>$ has been already arranged at the end of the common portion of the basis conversion circuit. When $CNOT_{ab}$ has been already arranged, the quantum circuit generation unit 110 advances the processing to step S310. When $CNOT_{ab}$ has not been arranged, the quantum circuit generation unit 110 advances the processing to step S309.

[Step S309] The quantum circuit generation unit 110 arranges $CNOT_{ab}$ having "qubit a" as a control qubit and "qubit b" as a target qubit at the end of the basis conversion circuit.

[Step S310] The quantum circuit generation unit 110 cancels replacement setting of the measurement result for the qubit pair of the qubits "qubit a" and "qubit b".

[Step S311] The quantum circuit generation unit 110 arranges a one-qubit gate corresponding to the observable to be measured in the qubits "qubit a" and "qubit b" to be operated by the arranged $CNOT_{ab}$.

[Step S312] The quantum circuit generation unit 110 determines whether or not the CNOT gate ($CNOT_{cd}$) for the two even-numbered qubits "qubit c" and "qubit d" for measuring an X or Y basis in the observables in $<H_i>$ has been already arranged at the end of the common portion of the basis conversion circuit. When $CNOT_{cd}$ has been already arranged, the quantum circuit generation unit 110 advances the processing to step S314. When $CNOT_{cd}$ has not been arranged, the quantum circuit generation unit 110 advances the processing to step S313.

[Step S313] The quantum circuit generation unit 110 arranges $CNOT_{cd}$ having "qubit c" as a control qubit and "qubit d" as a target qubit at the end of the basis conversion circuit.

[Step S314] The quantum circuit generation unit 110 cancels replacement setting of the measurement result for the qubit pair of the qubits "qubit c" and "qubit d".

[Step S315] The quantum circuit generation unit 110 arranges a one-qubit gate corresponding to the observable to be measured in the qubits "qubit c" and "qubit d" to be operated by the arranged $CNOT_{cd}$.

[Step S316] The quantum circuit generation unit 110 stores the quantum circuit for $<H_i>$ computation in the memory 102 or the storage device 103.

[Step S317] When the processing in steps S302 to S316 ends for all $<H_i>$, the quantum circuit generation unit 110 ends the basis conversion circuit ($<H_i>$ eigen portion) generation processing.

In this manner, a quantum circuit (Ansatz circuit + basis conversion circuit) for each Hamiltonian $<H_i>$ is generated. Based on the generated quantum circuit, an expected value of each Hamiltonian $<H_i>$ is computed.

FIG. 15 is a flowchart illustrating an example of a procedure of expected value computation processing of $<H_i>$. Hereinafter, the processing illustrated in FIG. 15 will be described in accordance with step numbers.

[Step S401] With respect to all the Hamiltonians $<H_i>$, the quantum computation management unit 120 executes processing in steps S402 to S404.

[Step S402] The quantum computation management unit 120 instructs the quantum computer 200 to execute the quantum circuit of the Hamiltonian $<H_i>$. In accordance with the instruction, the quantum computer 200 executes the quantum circuit and transmits a measurement result to the quantum computation management unit 120. The quantum computation management unit 120 transmits the acquired measurement result to the ground energy computation unit 130.

[Step S403] The ground energy computation unit 130 performs replacement of the measurement result in consideration of the CNOT gate. For example, the ground energy computation unit 130 performs replacement of the measurement result for the qubit pair set as the replacement target of the CNOT gate.

[Step S404] The ground energy computation unit 130 computes an expected value of the Hamiltonian $<H_i>$. Based on the measurement result, for example, the ground energy computation unit 130 computes all the observables that may be simultaneously measured by the Hamiltonian $<H_i>$. Based on these observables, the ground energy computation unit 130 computes the expected value of the Hamiltonian $<H_i>$.

[Step S405] When the expected values of all the Hamiltonians $<H_i>$ have been computed, the quantum computation management unit 120 ends the expected value computation processing of $<H_i>$.

In the above-described manner, the quantum computation system 300 may compute the Hamiltonian $<H_i>$ for each group when the simultaneously measurable observables are grouped, by using similar quantum circuits. A specific computation example of a Hamiltonian $<H>$ will be described below.

For example, a case where energy E is measured from the following Hamiltonian $<H>$ will be considered. $E = <H> = \Sigma H_i = h_0 Z_0 + h_1 Z_1 + h_2 Z_2 + h_3 Z_3 + h_4 Z_0 Z_1 + h_5 Z_0 Z_2 + h_6 Z_0 Z_3 + h_7 Z_1 Z_2 + h_8 Z_1 Z_3 + h_9 Z_2 Z_3 + h_{10} X_0 X_1 Y_2 Y_3 + h_{11} X_0 Y_1 Y_2 X_3 + h_{12} Y_0 X_1 X_2 Y_3 + h_{13} Y_0 Y_1 X_2 X_3$

In this case, the following two groups are generated as groups of simultaneously measurable observables.

· Observables of a group 1 (used for computation of $<H_1>$) $Z_0$, $Z_1$, $Z_2$, $Z_3$, $Z_0 Z_1$, $Z_0 Z_2$, $Z_0 Z_3$, $Z_1 Z_2$, $Z_1 Z_3$, and $Z_2 Z_3$
· Observables of a group 2 (used for computation of $<H_2>$) $X_0 X_1 Y_2 Y_3$, $X_0 Y_1 Y_2 X_3$, $Y_0 X_1 X_2 Y_3$, and $Y_0 Y_1 X_2 X_3$

By computing $<H_1>$ and $<H_2>$ for the respective groups and summing individual Hamiltonians, the energy E is obtained. To compute $<H_1>$ and $<H_2>$, quantum circuits respectively corresponding to $<H_1>$ and $<H_2>$ are generated. To generate the two quantum circuits, first, an Ansatz circuit to be used in common is generated.

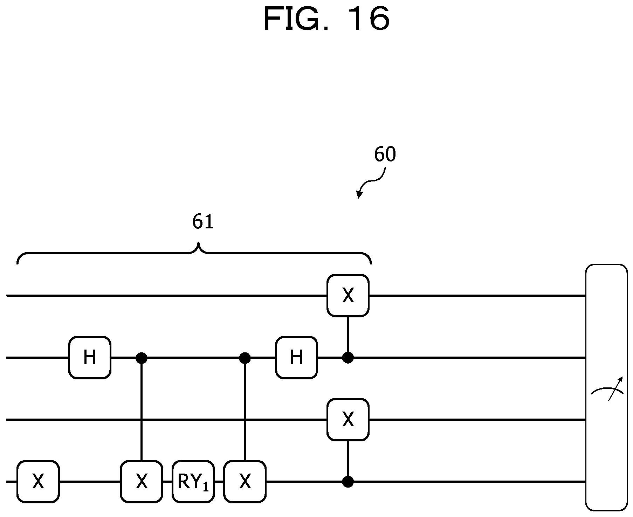

FIG. 16 is a diagram illustrating an example of an Ansatz circuit. In the example in FIG. 16, computation using four qubits is performed. In a quantum circuit 60, a procedure of a gate operation of a quantum gate for four qubits is illustrated. First, an Ansatz circuit 61 for generating a wave function of a problem to be solved is set in the quantum circuit 60.

Next, the common portion of the basis conversion circuit is added to the quantum circuit 60.

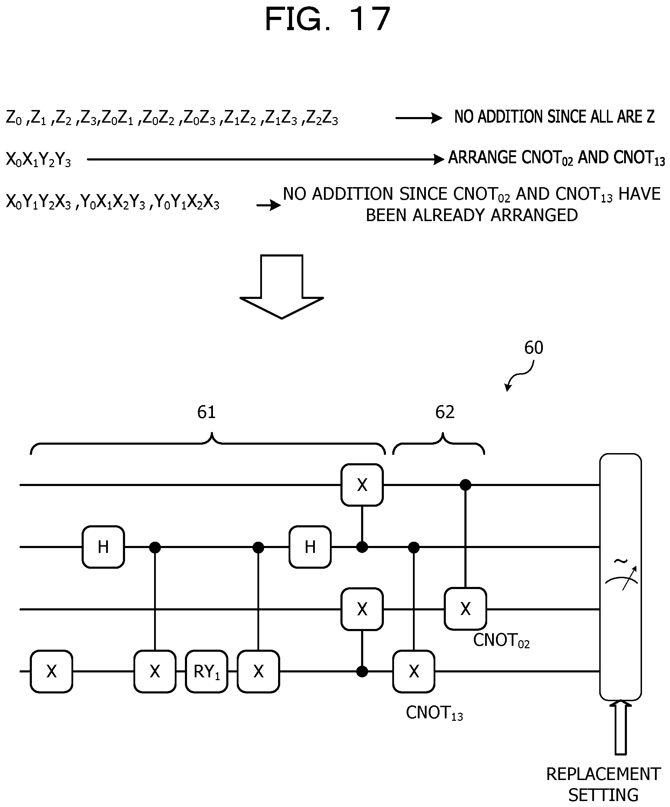

FIG. 17 is a diagram illustrating an example of the common portion of the basis conversion circuit. Arrangement of the CNOT gates in the common portion of the basis conversion circuit is determined for each observable. All the observables belonging to the group 1 are Z (determined as the "pattern 1" in step S203 in FIG. 13). Thus, CNOT gates corresponding to these observables are not added.

It is assumed that arrangement processing of a corresponding CNOT gate is first performed for $X_0X_1Y_2Y_3$ among the observables of the group 2. In $X_0X_1Y_2Y_3$, odd-numbered qubits ("1" and "3") are X and Y, and even-numbered qubits ("0" and "2") are X and Y (determined as the "pattern 3" in step S203 in FIG. 13). A CNOT gate ($CNOT_{02}$) corresponding to the even-numbered qubit pair $X_0Y_2$ and a CNOT gate ($CNOT_{13}$) corresponding to the odd-numbered qubit pair $X_1Y_3$ are arranged next to the Ansatz circuit 61 in the quantum circuit 60.

After that, arrangement processing of a CNOT gate is performed for the other observables $X_0Y_1Y_2X_3$, $Y_0X_1X_2Y_3$, and $Y_0Y_1X_2X_3$ in the group 2. While these observables are also determined as the "pattern 3", the corresponding CNOT gates have been already arranged (determined as "YES" in steps S206 and S208 in FIG. 13). Consequently, no new CNOT gate is arranged.

As a result, two CNOT gates of $CNOT_{02}$ and $CNOT_{13}$ are added as the common portion of a basis conversion circuit 62. Based on the quantum circuit 60 to which the common portion of the basis conversion circuit 62 has been added, a quantum circuit for each divided Hamiltonian is generated.

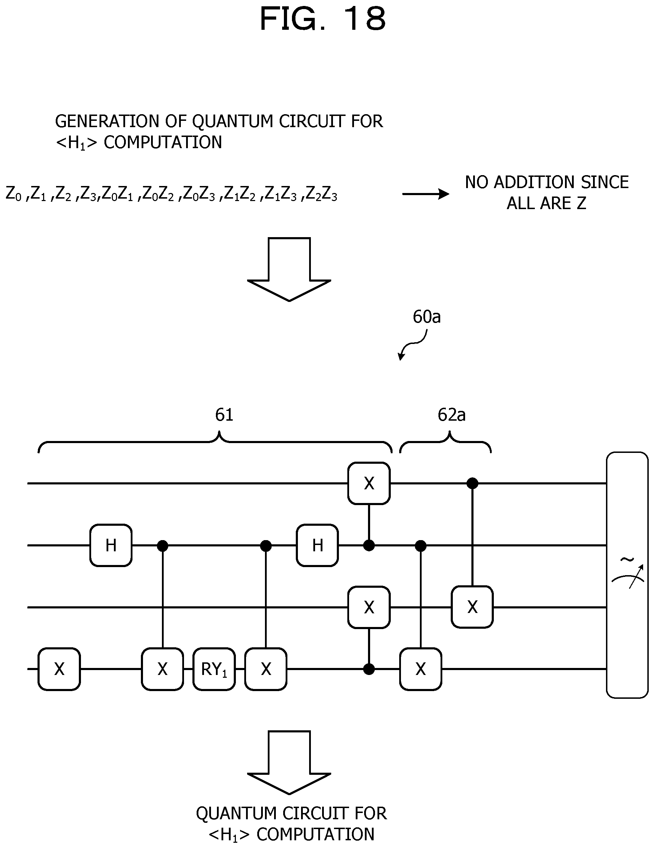

FIG. 18 is a diagram illustrating an example of a quantum circuit for $<H_1>$ computation. All the observables included in $<H_1>$ are composed only of Z (determined as the "pattern 1" in step S303 in FIG. 14). Therefore, a CNOT gate or a one-qubit gate is not added. As a result, a basis conversion circuit 62a of a quantum circuit 60a for $<H_1>$ computation has the same configuration as the common portion of the basis conversion circuit 62 of the quantum circuit 60 illustrated in FIG. 17. Therefore, the quantum circuit 60a as a whole has the same configuration as the quantum circuit 60.

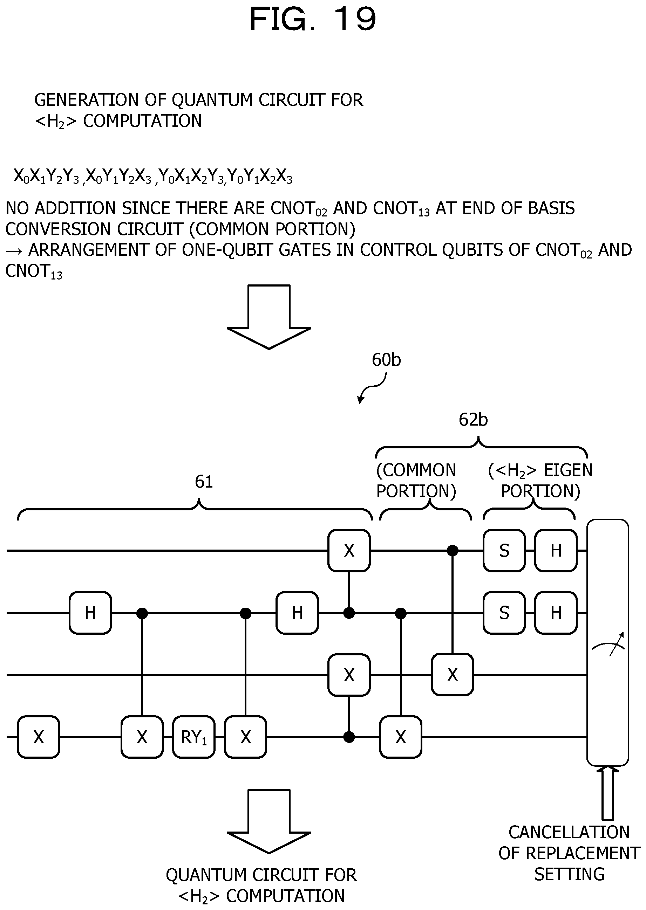

FIG. 19 is a diagram illustrating an example of a quantum circuit for $<H_2>$ computation. CNOT gates to be added in the observables included in $<H_2>$ are $CNOT_{02}$ and $CNOT_{13}$. With respect to the pair of qubits numbered "1" and "3" which are odd-numbered qubits, $CNOT_{13}$ has been already arranged at the end of a common portion of a basis conversion circuit 62b (determined as "YES" in step S308 in FIG. 14). Therefore, new $CNOT_{13}$ is not added as an eigen portion of the basis conversion circuit 62b of $<H_2>$. Replacement setting of the measurement result for the pair of qubits numbered "1" and "3" in the computation of $<H_2>$ is cancelled.

For the qubit numbered "1" that is the control qubit of $CNOT_{13}$, an S gate and an H gate that are one-qubit gates of an $<H_2>$ eigen portion are set as the eigen portion of the basis conversion circuit 62b.

With respect to the pair of qubits numbered "0" and "2" which are even-numbered qubits, $CNOT_{02}$ has been already arranged at the end of the common portion of the basis conversion circuit 62b (determined as "YES" in step S312 in FIG. 14). Therefore, new $CNOT_{02}$ is not added as the eigen portion of the basis conversion circuit 62b of $<H_2>$. Replacement setting of the measurement result for the pair of qubits numbered "0" and "2" in the computation of $<H_2>$ is cancelled.

For the qubit numbered "0" that is the control qubit of $CNOT_{02}$, an S gate and an H gate that are one-qubit gates of the $<H_2>$ eigen portion are set as the eigen portion of the basis conversion circuit 62b.

As a result, a quantum circuit 60b for $<H_2>$ computation has a configuration in which one-qubit gates are added to the same configuration as the quantum circuit 60 illustrated in FIG. 17.

As illustrated in FIGs. 18 and 19, the quantum circuits 60a and 60b respectively corresponding to the two divided Hamiltonians $<H_1>$ and $<H_2>$ are the same except for the eigen portions of the basis conversion circuits 62a and 62b. Since the commonality between the quantum circuits 60a and 60b is high, the influences of errors when the respective quantum circuits 60a and 60b are computed in the VQE computation are also approximated to each other. When there is similarity in the influence of errors, the optimization of the parameters in the VQE may be appropriately performed, and the computation of the expected value of the energy is facilitated. For example, the influence of a gate operation error is mitigated.

Although the embodiments are exemplified hereinabove, the configurations of the individual units described in the embodiments may be replaced with others having similar functions. Other arbitrary components or processes may be added. Two or more arbitrary configurations (features) of the embodiments described above may be combined.

**Claims**

1. A quantum computation support program comprising instructions which, when executed by a computer, cause the computer to execute processing comprising:

   classifying a plurality of observables used for computing a Hamiltonian that corresponds to a problem to be solved by a variational quantum eigensolver into any of a plurality of groups into which simultaneously measurable observables are grouped;

generating a first quantum circuit that includes a first basis conversion circuit for enabling simultaneous measurement of a plurality of first observables that belong to a first group;

generating a second quantum circuit that includes a second basis conversion circuit in which a quantum gate for enabling simultaneous measurement of a plurality of second observables that belong to a second group and a second two-qubit gate that performs a same gate operation as a first two-qubit gate included in the first basis conversion circuit are arranged;

acquiring measurement results of the plurality of first observables by causing a quantum computer to execute the first quantum circuit;

acquiring measurement results of the plurality of second observables by performing replacement according to the second two-qubit gate, with respect to a measurement result obtained by causing the quantum computer to execute the second quantum circuit; and

computing the Hamiltonian by using the measurement results of the plurality of first observables and the plurality of second observables.

2. The quantum computation support program according to claim 1, the processing further comprising

generating, following an Ansatz circuit that represents a wave function, a third quantum circuit that includes a third basis conversion circuit in which a third two-qubit gate that corresponds to any of the plurality of observables is arranged, wherein

the generating of the first quantum circuit includes generating the first quantum circuit by adding, to the third basis conversion circuit of the third quantum circuit, a quantum gate that is insufficient to enable simultaneous measurement of the plurality of first observables, and

the generating of the second quantum circuit includes generating the second quantum circuit by adding, to the third basis conversion circuit of the third quantum circuit, a quantum gate that is insufficient to enable simultaneous measurement of the plurality of second observables.

3. The quantum computation support program according to claim 2, wherein the generating of the third quantum circuit includes:

sequentially selecting each of the plurality of observables, and

in a case where the third two-qubit gate that corresponds to the selected observable is not yet arranged in the third basis conversion circuit, arranging in the third basis conversion circuit, the third two-qubit gate that corresponds to the selected observable.

4. The quantum computation support program according to claim 2 or claim 3, wherein the generating of the third quantum circuit includes:

arranging in the third basis conversion circuit, the third two-qubit gate to be caused to act on a pair of two qubits that serves as a measurement target of an X basis or a Y basis in one first observable among the plurality of first observables, and

setting as a replacement target, the pair of qubits on which the third two-qubit gate is caused to act, and the generating of the first quantum circuit includes,

in a case where the first two-qubit gate to be caused to act on the pair of two qubits that serves as the measurement target of the X basis or the Y basis in the first observable has been already arranged in the third basis conversion circuit, excluding the pair of qubits on which the first two-qubit gate is caused to act, from the replacement target for the measurement result obtained by executing the first quantum circuit.

5. A quantum computation support method implemented by a computer, the quantum computation support method comprising:

the computer classifying a plurality of observables used for computing a Hamiltonian that corresponds to a problem to be solved by a variational quantum eigensolver into any of a plurality of groups into which simultaneously measurable observables are grouped;

the computer generating a first quantum circuit that includes a first basis conversion circuit for enabling simultaneous measurement of a plurality of first observables that belong to a first group;

the computer generating a second quantum circuit that includes a second basis conversion circuit in which a quantum gate for enabling simultaneous measurement of a plurality of second observables that belong to a second group and a second two-qubit gate that performs a same gate operation as a first two-qubit gate included in the first basis conversion circuit are arranged;

the computer acquiring measurement results of the plurality of first observables by causing a quantum computer to execute the first quantum circuit;

the computer acquiring measurement results of the plurality of second observables by performing replacement according to the second two-qubit gate, with respect to a measurement result obtained by causing the quantum computer to execute the second quantum circuit; and

the computer computing the Hamiltonian by using the measurement results of the plurality of first observables and the plurality of second observables.

6. A information processing apparatus comprising a processing unit configured to perform processing including:

classifying a plurality of observables used for computing a Hamiltonian that corresponds to a problem to be solved by a variational quantum eigensolver into any of a plurality of groups into which simultaneously measurable observables are grouped;

generating a first quantum circuit that includes a first basis conversion circuit for enabling simultaneous measurement of a plurality of first observables that belong to a first group;

generating a second quantum circuit that includes a second basis conversion circuit in which a quantum gate for enabling simultaneous measurement of a plurality of second observables that belong to a second group and a second two-qubit gate that performs a same gate operation as a first two-qubit gate included in the first basis conversion circuit are arranged;

acquiring measurement results of the plurality of first observables by causing a quantum computer to execute the first quantum circuit;

acquiring measurement results of the plurality of second observables by performing replacement according to the second two-qubit gate, with respect to a measurement result obtained by causing the quantum computer to execute the second quantum circuit; and

computing the Hamiltonian by using the measurement results of the plurality of first observables and the plurality of second observables.

# FIG. 1

OBSERVABLES    $Z_a, Z_b, \cdots, Z_a Z_b, \cdots, X_a X_b, Y_a Y_b, \cdots$

ADDITION OF CNOT GATE

REPLACEMENT: {a, b}

FIRST GROUP: $\cdots, X_a X_b, Y_a Y_b, \cdots$

SECOND GROUP: $Z_a, Z_b, \cdots, Z_a Z_b, \cdots$

CANCELLATION OF REPLACEMENT

REPLACEMENT: {a, b}

INSTRUCT QUANTUM COMPUTER TO EXECUTE FIRST QUANTUM CIRCUIT

INSTRUCT QUANTUM COMPUTER TO EXECUTE SECOND QUANTUM CIRCUIT

FIRST OBSERVABLES

SECOND OBSERVABLES

COMPUTATION OF HAMILTONIAN

REPLACEMENT OF MEASUREMENT RESULT

INFORMATION PROCESSING APPARATUS

STORAGE UNIT    PROCESSING UNIT    QUANTUM COMPUTER

# FIG. 2

# FIG. 3

21

100

101 104

| PROCESSOR | GPU |

22

102 105

| MEMORY | INPUT INTERFACE |

23

103 106

| STORAGE DEVICE | OPTICAL DRIVE DEVICE |

24

108a 107

| NETWORK INTERFACE | DEVICE COUPLING INTERFACE |

25

109 108b

| NETWORK INTERFACE |

26

27

20

NETWORK

200

210

| CONTROL DEVICE |

220

| QUANTUM DEVICE |

# FIG. 4

CLASSICAL COMPUTER — 100

QUANTUM CIRCUIT GENERATION UNIT — 110

GROUND ENERGY COMPUTATION UNIT — 130

QUANTUM COMPUTATION MANAGEMENT UNIT — 120

OPTIMIZATION COMPUTATION UNIT — 140

QUANTUM COMPUTER — 200

# FIG. 5

HAMILTONIAN

$$H = H_1 + H_2 + \cdots$$

$$H_i = aO_{i1} + bO_{i2} + \cdots$$

⬇

**200** QUANTUM COMPUTER

$\psi(\theta)$

QUANTUM MEASUREMENT

**30** QUANTUM CIRCUIT

$<H_1>$

$<H_2>$

$<H_N>$

**100** CLASSICAL COMPUTER

$<H_1>$
+
$<H_2>$
+
...
+
$<H_N>$

ADDITION

OPTIMIZATION OF $\theta$

UPDATE OF $\theta$

# FIG. 6

# FIG. 7

[PATTERN 1]

OBSERVABLE COMPOSED ONLY OF TENSOR
PRODUCT OF Z AND I

Ansatz CIRCUIT

# FIG. 8

[PATTERN 2] QUBIT a IS X or Y, AND QUBIT b IS X or Y

$(X \text{ or } Y)_k Z_{k+1}...Z_{l-1}(X \text{ or } Y)_L$
$Z_p (X \text{ or } Y)_k Z_{k+1}...Z_{l-1}(X \text{ or } Y)_l$
$(X \text{ or } Y)_k Z_{k+1}...Z_{l-1}(X \text{ or } Y)_l Z_p$

# FIG. 9

[PATTERN 3] ODD-NUMBERED QUBIT a AND ODD-NUMBERED QUBIT b ARE X or Y, AND EVEN-NUMBERED QUBIT c AND EVEN-NUMBERED QUBIT d ARE X or Y

$(X \text{ or } Y)_k Z_{k+1}...Z_{l-1}(X \text{ or } Y)_l (X \text{ or } Y)_p Z_{p+1}...Zq\text{-}1_{q-1}(X \text{ or } Y)_q$

# FIG. 10

| MEASUREMENT RESULT OF $\lvert ...x...y...\rangle$ | AFTER REPLACEMENT |
|---|---|
| $\lvert \cdots 0 \cdots 0 \cdots \rangle$ | $\lvert \cdots 0 \cdots 0 \cdots \rangle$ |
| $\lvert \cdots 0 \cdots 1 \cdots \rangle$ | $\lvert \cdots 0 \cdots 1 \cdots \rangle$ |
| $\lvert \cdots 1 \cdots 0 \cdots \rangle$ | $\lvert \cdots 1 \cdots 1 \cdots \rangle$ |
| $\lvert \cdots 1 \cdots 1 \cdots \rangle$ | $\lvert \cdots 1 \cdots 0 \cdots \rangle$ |

FIG. 11

HAMILTONIAN
TO BE SOLVED

WITHOUT
PROCESSING OF
REDUCING
DIFFERENCE

$$H = \sum H_i$$

WITH PROCESSING OF
REDUCING DIFFERENCE

DIFFERENT QUANTUM GATE GROUP | DIFFERENT QUANTUM GATE GROUP

51a  Ansatz                                                              →$<H_1>$
51b  Ansatz | TWO-QUBIT GATE GROUP (1) | ONE-QUBIT GATE GROUP (1)       →$<H_2>$
51c  Ansatz | TWO-QUBIT GATE GROUP (2) | ONE-QUBIT GATE GROUP (2)       →$<H_3>$
51d  Ansatz | TWO-QUBIT GATE GROUP (3) | ONE-QUBIT GATE GROUP (3)       →$<H_4>$
51e  Ansatz | TWO-QUBIT GATE GROUP (4) | ONE-QUBIT GATE GROUP (4)       →$<H_5>$

SAME QUANTUM GATE GROUP | DIFFERENT QUANTUM GATE GROUP

52a  Ansatz | TWO-QUBIT GATE GROUP (1)                                  →$<H_1>$
52b  Ansatz | TWO-QUBIT GATE GROUP (1) | ONE-QUBIT GATE GROUP (1)       →$<H_2>$
52c  Ansatz | TWO-QUBIT GATE GROUP (1) | ONE-QUBIT GATE GROUP (2)       →$<H_3>$
52d  Ansatz | TWO-QUBIT GATE GROUP (1) | ONE-QUBIT GATE GROUP (3)       →$<H_4>$

SIMILAR QUANTUM GATE GROUP

52k  Ansatz | TWO-QUBIT GATE GROUP (1a) | ONE-QUBIT GATE GROUP (k)      →$<H_k>$

# FIG. 12

```
                    ┌─────────────┐
                    │    START    │
                    └──────┬──────┘
                           │
        ┌──────────────────▼──────────────────┐   S101
        │  ACQUIRE HAMILTONIAN TO BE           │
        │  SOLVED                              │
        └──────────────────┬──────────────────┘
                           │
        ┌──────────────────▼──────────────────┐   S102
        │  DECOMPOSE HAMILTONIAN               │
        │  (H=H₁+H₂+...)                       │
        └──────────────────┬──────────────────┘
                           │
        ┌──────────────────▼──────────────────┐   S103
        │  GENERATE Ansatz CIRCUIT             │
        └──────────────────┬──────────────────┘
                           │
        ┌──────────────────▼──────────────────┐   S104
        │  GENERATE BASIS CONVERSION           │
        │  CIRCUIT (COMMON PORTION)            │
        └──────────────────┬──────────────────┘
                           │
        ┌──────────────────▼──────────────────┐   S105
        │  GENERATE BASIS CONVERSION           │
        │  CIRCUIT                             │
        │  (<Hᵢ> EIGEN PORTION)                │
        └──────────────────┬──────────────────┘
                           │◄──────────────────────────────┐
        ┌──────────────────▼──────────────────┐   S106      │
        │  COMPUTE EXPECTED VALUE OF           │             │
        │  <Hᵢ>                                │             │
        └──────────────────┬──────────────────┘             │
                           │                                │
        ┌──────────────────▼──────────────────┐   S107      │
        │  COMPUTE ENERGY VALUE                │             │
        │  E= Σ <Hᵢ>                           │             │
        └──────────────────┬──────────────────┘             │
                           │                                │
                    ◇──────▼──────◇   S108                   │
              HAS E CONVERGED TO          NO    ┌────────────┐ S109
                MINIMUM VALUE? ──────────────►  │ UPDATE     │
                    ◇─────────────◇             │ PARAMETERS │
                           │ YES                └────────────┘
        ┌──────────────────▼──────────────────┐   S110
        │  OUTPUT GROUND ENERGY               │
        └──────────────────┬──────────────────┘
                           │
                    ┌──────▼──────┐
                    │     END     │
                    └─────────────┘
```

Equations:

$H = H_1 + H_2 + \ldots$

$E = \sum \langle H_i \rangle$

# FIG. 13

```
        ┌──────────────────────────────────┐
        │  START BASIS CONVERSION CIRCUIT  │
        │  (COMMON PORTION) GENERATION     │
        └──────────────────────────────────┘
                        │
                        ▼                          S201
        ┌──────────────────────────────────┐
        │        READ Ansatz CIRCUIT       │
        └──────────────────────────────────┘
                        │                          S202
                        ▼
        ┌──────────────────────────────────┐
        │          LOOP FOR $O_i$          │
        └──────────────────────────────────┘
                        │                          S203
PATTERN 1               ▼              PATTERN 3
      ◇─────────────────────────────────────◇
         CONFIGURATION OF $O_i$?
                        │  PATTERN 2       S204
                        ▼
            ◇─────────────────────────◇
    YES ◄─── HAS $CNOT_{ab}$ BEEN ALREADY
             ARRANGED IN QUBITS a AND b?
                        │ NO              S205
                        ▼
        ┌──────────────────────────────────┐
        │ ARRANGE $CNOT_{ab}$ IN QUBITS a  │
        │   AND b AND PERFORM REPLACEMENT  │
        │            SETTING               │
        └──────────────────────────────────┘

                                              S206
                    ◇─────────────────────────◇
            YES ◄─── HAS $CNOT_{ab}$ BEEN ALREADY
                     ARRANGED IN QUBITS a AND b?
                                │ NO           S207
                                ▼
                ┌──────────────────────────────────┐
                │ ARRANGE $CNOT_{ab}$ IN QUBITS a  │
                │  AND b AND PERFORM REPLACEMENT   │
                │           SETTING                │
                └──────────────────────────────────┘

                                              S208
                    ◇─────────────────────────◇
            YES ◄─── HAS $CNOT_{cd}$ BEEN ALREADY
                     ARRANGED IN QUBITS c AND d?
                                │ NO           S209
                                ▼
                ┌──────────────────────────────────┐
                │ ARRANGE $CNOT_{cd}$ IN QUBITS c  │
                │  AND d AND PERFORM REPLACEMENT   │
                │           SETTING                │
                └──────────────────────────────────┘

                        ▼                          S210
        ┌──────────────────────────────────┐
        │          LOOP FOR $O_i$          │
        └──────────────────────────────────┘
                        │
                        ▼
                    ┌─────────┐
                    │   END   │
                    └─────────┘
```

# FIG. 14

START BASIS CONVERSION CIRCUIT
($<H_i>$ EIGEN PORTION) GENERATION

LOOP FOR $H_i$ — S301

READ Ansatz CIRCUIT + BASIS CONVERSION CIRCUIT (COMMON PORTION) — S302

PATTERN 1 ← CONFIGURATION OF OBSERVABLES IN $H_i$? — S303 → PATTERN 3

PATTERN 2

HAS $CNOT_{ab}$ BEEN ALREADY ARRANGED AT END? — S304

NO → ARRANGE $CNOT_{ab}$ IN QUBITS a AND b — S305

YES

S306 — CANCEL REPLACEMENT SETTING

S307 — ARRANGE ONE-QUBIT GATE IN QUBITS a AND b

NO → ARRANGE $CNOT_{ab}$ IN QUBITS a AND b

S309

HAS $CNOT_{ab}$ BEEN ALREADY ARRANGED AT END? — S308

YES

CANCEL REPLACEMENT SETTING — S310

ARRANGE ONE-QUBIT GATE IN QUBITS a AND b — S311

HAS $CNOT_{cd}$ BEEN ALREADY ARRANGED AT END? — S312

NO → ARRANGE $CNOT_{cd}$ IN QUBITS c AND d — S313

YES

CANCEL REPLACEMENT SETTING — S314

ARRANGE ONE-QUBIT GATE IN QUBITS c AND d — S315

STORE QUANTUM CIRCUIT FOR $<H_i>$ COMPUTATION — S316

LOOP FOR $H_i$ — S317

END

# FIG. 15

START CALCULATING
EXPECTED VALUE OF $<H_i>$

LOOP FOR $<H_i>$ — S401

INSTRUCT QUANTUM COMPUTER TO
EXECUTE QUANTUM CIRCUIT OF $<H_i>$ — S402

REPLACE MEASUREMENT RESULT IN
CONSIDERATION OF CNOT GATE — S403

COMPUTE EXPECTED VALUE OF $<H_i>$ — S404

LOOP FOR $<H_i>$ — S405

END

# FIG. 16

# FIG. 17

$Z_0, Z_1, Z_2, Z_3, Z_0Z_1, Z_0Z_2, Z_0Z_3, Z_1Z_2, Z_1Z_3, Z_2Z_3$ $\longrightarrow$ NO ADDITION SINCE ALL ARE Z

$X_0X_1Y_2Y_3$ $\longrightarrow$ ARRANGE $CNOT_{02}$ AND $CNOT_{13}$

$X_0Y_1Y_2X_3, Y_0X_1X_2Y_3, Y_0Y_1X_2X_3$ $\longrightarrow$ NO ADDITION SINCE $CNOT_{02}$ AND $CNOT_{13}$ HAVE BEEN ALREADY ARRANGED

# FIG. 18

GENERATION OF QUANTUM CIRCUIT FOR
$<H_1>$ COMPUTATION

$Z_0, Z_1, Z_2, Z_3, Z_0Z_1, Z_0Z_2, Z_0Z_3, Z_1Z_2, Z_1Z_3, Z_2Z_3$ $\longrightarrow$ NO ADDITION SINCE ALL ARE Z

60a

QUANTUM CIRCUIT FOR
$<H_1>$ COMPUTATION

# FIG. 19

GENERATION OF QUANTUM CIRCUIT FOR
$<H_2>$ COMPUTATION

$X_0X_1Y_2Y_3 , X_0Y_1Y_2X_3 , Y_0X_1X_2Y_3 , Y_0Y_1X_2X_3$

NO ADDITION SINCE THERE ARE $CNOT_{02}$ AND $CNOT_{13}$ AT END OF BASIS
CONVERSION CIRCUIT (COMMON PORTION)
$\rightarrow$ ARRANGEMENT OF ONE-QUBIT GATES IN CONTROL QUBITS OF $CNOT_{02}$ AND
$CNOT_{13}$

QUANTUM CIRCUIT FOR
$<H_2>$ COMPUTATION

CANCELLATION
OF REPLACEMENT
SETTING

Europäisches
Patentamt
European
Patent Office
Office européen
des brevets

# EUROPEAN SEARCH REPORT

**Application Number**

EP 25 16 7417

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JULES TILLY ET AL: "The Variational Quantum Eigensolver: a review of methods and best practices", ARXIV.ORG, CORNELL UNIVERSITY LIBRARY, 201 OLIN LIBRARY CORNELL UNIVERSITY ITHACA, NY 14853, 12 June 2022 (2022-06-12), XP091244965, * page 1 - page 10 * | 1-6 | INV. G06N10/20 G06N10/40 G06N10/60 G06N10/70 |
| X | IKKO HAMAMURA ET AL: "Efficient evaluation of quantum observables using entangled measurements", ARXIV.ORG, CORNELL UNIVERSITY LIBRARY, 201 OLIN LIBRARY CORNELL UNIVERSITY ITHACA, NY 14853, 19 September 2019 (2019-09-19), XP081563673, * page 1 - page 5 * * Appendix B * | 1-6 | |

**TECHNICAL FIELDS SEARCHED (IPC)**

G06N

The present search report has been drawn up for all claims

| Place of search | Date of completion of the search | Examiner |
|---|---|---|
| The Hague | 11 July 2025 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 641 452 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023035941 A
- JP 2023501752 A
- US 20210294680
- US 20230016817 A